# EUROPEAN PATENT SPECIFICATION

(11) **EP 3 525 360 B1**
(45) Date of publication and mention of the grant of the patent: **26.08.2020**
(21) Application number: 16920304.9
(22) Date of filing: 28.10.2016
(51) Int. Cl.: H04B 7/04

(54) **INFORMATION TRANSMISSION METHOD, ACCESS NETWORK DEVICE, AND TERMINAL DEVICE**
INFORMATIONSÜBERTRAGUNGSVERFAHREN, ZUGANGSNETZVORRICHTUNG UND ENDGERÄTEVORRICHTUNG
PROCÉDÉ DE TRANSMISSION D'INFORMATIONS, DISPOSITIF DE RÉSEAU D'ACCÈS, ET DISPOSITIF TERMINAL

(43) Date of publication of application: 14.08.2019
(73) Proprietor: Huawei Technologies Co., Ltd., Longgang District Shenzhen, Guangdong 518129 (CN)
(72) Inventor: SUN, Xiaodong, Shenzhen Guangdong 518129 (CN); STIRLING-GALLACHER, Richard, Shenzhen Guangdong 518129 (CN); XU, Kai, Shenzhen Guangdong 518129 (CN); SUN, Yanliang, Shenzhen Guangdong 518129 (CN)
(74) Representative: Thun, Clemens
(86) International application number: PCT/CN2016/103857
(87) International publication number: WO 2018/076305

(56) References cited:
- WO-A1-2015/141066
- WO-A1-2015/141066
- CN-A- 104 184 561
- CN-A- 105 245 310
- CN-A- 105 322 988
- US-A1- 2016 119 043
- ZTE ET AL: "Beam selection and CSI acquisition for NR MIMO", 3GPP DRAFT; R1-1608671 BEAM SELECTION AND CSI ACQUISITION FOR NR MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Lisbon, Portugal; 20161010 - 20161014 1 October 2016 (2016-10-01), XP051159027, Retrieved from the Internet: URL:http://www.3gpp.org/ftp/tsg_ran/WG1_RL 1/TSGR1_86b/Docs/ [retrieved on 2016-10-01]

## Description

### TECHNICAL FIELD

The present invention relates to communications technologies, and in particular, to an information transmission method, an access network device, and a terminal device.

### BACKGROUND

In a conventional fourth-generation mobile communications system, to better perform downlink data transmission, channel measurement usually needs to be performed on a downlink. To be specific, a terminal device (User Equipment, UE for short) may perform channel estimation based on a channel state information-reference signal (Channel State Information-Reference Signal, CSI-RS for short) delivered by a base station side, and then perform CSI feedback for the base station side, so that the base station side can perform downlink data transmission based on a CSI-RS sequence number or a beamforming vector that is fed back.

In the prior art, a base station side may send CSI-RSs to a terminal device at two levels, and the UE correspondingly performs CSI feedback at two levels. Specifically, the base station side defines resources required for sending a plurality of CSI-RS signals, and when sending a CSI-RS at a first level, the base station side performs beamforming on each CSI-RS by using a corresponding beamforming factor on a specified resource, and then sends the CSI-RS to the UE, where CSI-RSs obtained after beamforming are corresponding to different beamforming factors. The UE performs channel estimation based on the received CSI-RS signal obtained after the beamforming, to select a CSI-RS sequence number (the CSI-RS sequence number may be corresponding to a beam sequence number) corresponding to a CSI-RS signal with optimal signal quality, and reports the CSI-RS sequence number to the base station side. This is first-level CSI feedback of the UE. The base station side then performs, based on the CSI-RS sequence number reported by the UE, beamforming on a to-be-sent CSI-RS signal at a second level by using a corresponding narrow beam, and delivers the CSI-RS signal to the UE. The UE continues to perform channel estimation based on the CSI-RS signal delivered at the second level, to select a CSI-RS sequence number corresponding to a CSI-RS signal with optimal signal quality, and reports the CSI-RS sequence number to the base station side. This is second-level CSI feedback of the UE. The base station side then may learn of a current beamforming direction based on the CSI-RS sequence number fed back by the UE at the second level, and may further perform downlink data transmission by using a waveform in the direction.

Prior art document ZTE et.al.:"Beam selection and CSI acquisition for NR MIMO",

Further, WO 2015/141066 A1 refers to a beam selection method, which is used in a mobile communication system that includes a base station that has a plurality of antenna elements and a user device that communicates wirelessly with said base station, the base station detects the direction in which the user device is located, uses spatial multiplexing to transmit a plurality of precoded reference signals in the detected direction using the same frequency resource and the same time resource, and determines the beam to use for the user device on the basis of feedback information from the user device.

However, in the prior art, the CSI-RS sequence number reported by the UE is inaccurate, in other words, the CSI-RS beamforming direction reported by the UE is inaccurate. Consequently, average frequency efficiency of a cell and frequency efficiency of a cell-edge user are reduced, and unnecessary interference between neighboring cells is caused.

### SUMMARY

Embodiments of the present invention provide an information transmission method, an access network device, and a terminal device, to resolve a prior-art problem that because a CSI-RS sequence number reported by UE is inaccurate, in other words, a CSI-RS beamforming direction reported by the UE is inaccurate, average frequency efficiency of a cell and frequency efficiency of a cell-edge user are reduced and unnecessary interference between neighboring cells is caused because a CSI-RS sequence number reported by UE is inaccurate, in other words, a CSI-RS beamforming direction reported by the UE is inaccurate. This problem is solved by the subject matter of the independent claims. Further implementation forms are provided in the dependent claims.

According to a first aspect, an embodiment of the present invention provides an information transmission method, including:
sending, by an access network device, a channel state information-reference signal CSI-RS configuration parameter to a terminal device UE, where the CSI-RS configuration parameter includes a quantity of CSI-RS signals to be sent by the access network device at each level and a sampling rate at each level; and
receiving, by the access network device after sending, based on the quantity of CSI-RS signals at each level, a CSI-RS signal corresponding to each level to the UE, a beamforming parameter at each level that is reported by the UE for the CSI-RS signal at each level, where the beamforming parameter at each level is determined by the UE based on the CSI-RS signal at each level and the sampling rate at each level, a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

According to the information transmission method provided in the first aspect, the access network device sends, to the UE, the CSI-RS configuration parameter that includes the quantity of CSI-RS signals at each level and the sampling rate at each level, and after sending, based on the quantity of CSI-RS signals at each level, the CSI-RS signal corresponding to each level to the UE, the access network device receives the beamforming parameter at each level that is reported by the UE for the CSI-RS signal at each level. The UE may calculate an accurate beamforming parameter based on the CSI-RS configuration parameter and the CSI-RS signal delivered at each level, the width of the beam represented by the beamforming parameter at each level is less than the width of the beamforming used for delivering the CSI-RS signal at each level, and the width of the beamforming used for delivering the CSI-RS signal at the current level is less than or equal to the width of the beam represented by the beamforming parameter reported at the previous level. Therefore, there may be a plurality of beam width decrease processes in this embodiment of the present invention, so that a width of a beam represented by a beamforming parameter finally reported by the UE to the access network device is far less than a width of a beam reported by UE to an access network device at a second level in the prior art, accuracy of a beam direction is greatly improved, and the beam is more directive. Therefore, when the access network device performs downlink data transmission, interference between neighboring cells can be obviously avoided, and average frequency efficiency of a cell and frequency efficiency of a cell-edge user are greatly improved.

In a possible design, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

In a possible design, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

In a possible design, the CSI-RS configuration parameter includes a quantity of CSI-RS signals to be sent by the access network device at a first level, a quantity of CSI-RSs to be sent at a second level, a sampling rate at the first level, and a sampling rate at the second level, and the receiving, by the access network device after sending, based on the quantity of CSI-RS signals at each level, a CSI-RS signal corresponding to each level to the UE, a beamforming parameter at each level that is reported by the UE for the CSI-RS signal at each level specifically includes:
after sending a first CSI-RS signal to the UE based on the quantity of CSI-RS signals to be sent at the first level and a preset first beam group, receiving, by the access network device, a first beamforming parameter reported by the UE based on the quantity of CSI-RS signals to be sent at the first level, the sampling rate at the first level, and the first CSI-RS signal, where a width of a beam represented by the first beamforming parameter is less than a width of a beam in the first beam group, a quantity of beams in the first beam group is equal to a quantity of first CSI-RS signals, and all the first CSI-RS signals have a same beamforming factor;
determining, by the access network device, a second beam group based on the first beamforming parameter, and sending a second CSI-RS signal to the UE based on the quantity of CSI-RS signals to be sent at the second level and the second beam group, where a width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor; and
receiving, by the access network device, a second beamforming parameter reported by the UE based on the quantity of CSI-RS signals to be sent at the second level, the sampling rate at the second level, and the second CSI-RS signal, where a width of beamforming represented by the second beamforming parameter is less than the width of the beam in the second beam group.

In a possible design, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

According to the information transmission method provided in the foregoing possible designs, the access network device sends, to the UE, the CSI-RS configuration parameter that includes the quantity of CSI-RS signals at each level and the sampling rate at each level, and then sends the first CSI-RS signal to the UE based on the quantity of CSI-RS signals to be sent at the first level and the preset first beam group, so that the UE determines the first beamforming parameter based on the quantity of CSI-RS signals to be sent at the first level, the sampling rate at the first level, and the first CSI-RS signal, and reports the first beamforming parameter to the access network device, and the access network device then determines the second beam group based on the first beamforming parameter, and sends the second CSI-RS signal to the UE based on the quantity of CSI-RS signals to be sent at the second level and the second beam group, so that the UE determines the second beamforming parameter based on the quantity of CSI-RS signals to be sent at the second level, the sampling rate at the second level, and the second CSI-RS signal, and reports the second beamforming parameter to the access network device. The UE may calculate the accurate beamforming parameter based on the CSI-RS configuration parameter and the CSI-RS signal delivered at each level, the width of the beam represented by the beamforming parameter at each level is less than the width of the beamforming used for delivering the CSI-RS signal at each level, and the width of the beamforming used for delivering the CSI-RS signal at the current level is less than or equal to the width of the beam represented by the beamforming parameter reported at the previous level. Therefore, there may be a plurality of beam width decrease processes in this embodiment of the present invention, so that the width of the beam represented by the beamforming parameter finally reported by the UE to the access network device is far less than the width of the beam reported by the UE to the access network device at the second level in the prior art, accuracy of the beam direction is greatly improved, and the beam is more directive. Therefore, when the access network device performs downlink data transmission, interference between neighboring cells can be obviously avoided, and average frequency efficiency of a cell and frequency efficiency of a cell-edge user are greatly improved.

In a possible design, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

According to the information transmission method provided in the possible design, the access network device sends the CSI-RS signal at the first level in the time domain window, and sends the CSI-RS signal at the second level in the frequency domain window. Therefore, not only coverage performance of the CSI-RS signal at the first level can be enhanced, but also a measurement rate of the CSI-RS signal at the second level can be accelerated, thereby improving channel measurement accuracy, and improving a traffic channel transmission rate.

According to a second aspect, an embodiment of the present invention provides an information transmission method, including:
receiving, by a terminal device UE, a channel state information-reference signal CSI-RS configuration parameter sent by an access network device, where the CSI-RS configuration parameter includes a quantity of CSI-RS signals to be sent by the access network device at each level and a sampling rate at each level; and
reporting, by the UE to the access network device, a beamforming parameter at each level based on a CSI-RS signal at each level and the sampling rate at each level after receiving the CSI-RS signal at each level that is sent by the access network device, where a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

In a possible design, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

In a possible design, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

In a possible design, the CSI-RS configuration parameter includes a quantity of CSI-RS signals to be sent by the access network device at a first level, a quantity of CSI-RSs to be sent at a second level, a sampling rate at the first level, and a sampling rate at the second level, and the reporting, by the UE to the access network device, a beamforming parameter at each level based on a CSI-RS signal at each level and the sampling rate at each level after receiving the CSI-RS signal at each level that is sent by the access network device specifically includes:
after receiving a first CSI-RS signal sent by the access network device based on the quantity of CSI-RS signals to be sent at the first level and a first beam group, determining, by the UE, a first beamforming parameter based on the quantity of CSI-RS signals to be sent at the first level, the sampling rate at the first level, and the first CSI-RS signal, and reporting the first beamforming parameter to the access network device, where a width of a beam represented by the first beamforming parameter is less than a width of a beam in the first beam group, a quantity of beams in the first beam group is equal to a quantity of first CSI-RS signals, and all the first CSI-RS signals have a same beamforming factor; and
after receiving a second CSI-RS signal sent by the access network device based on the quantity of CSI-RS signals to be sent at the second level and a second beam group, determining, by the UE, a second beamforming parameter based on the quantity of CSI-RS signals to be sent at the second level, the sampling rate at the second level, and the second CSI-RS signal, and reporting the second beamforming parameter to the access network device, where the second beam group is determined by the access network device based on the first beamforming parameter, a width of a beam in the second beam group is less than or equal to the width of the beam represented by the first beamforming parameter, a quantity of beams in the second beam group is equal to a quantity of second CSI-RS signals, all the second CSI-RS signals have a same beamforming factor, and a width of beamforming represented by the second beamforming parameter is less than the width of the beam in the second beam group.

In a possible design, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

In a possible design, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

For beneficial effects of the information transmission method provided in the second aspect and the possible designs of the second aspect, refer to the beneficial effects brought by the first aspect and the possible designs of the first aspect. Details are not described herein.

According to a third aspect, an embodiment of the present invention provides an access network device, including:
a sending module, configured to send a channel state information-reference signal CSI-RS configuration parameter to a terminal device UE, where the CSI-RS configuration parameter includes a quantity of CSI-RS signals to be sent by the access network device at each level and a sampling rate at each level; and
a receiving module, configured to: after the sending module sends, based on the quantity of CSI-RS signals at each level, a CSI-RS signal corresponding to each level to the UE, receive a beamforming parameter at each level that is reported by the UE for the CSI-RS signal at each level, where the beamforming parameter at each level is determined by the UE based on the CSI-RS signal at each level and the sampling rate at each level, a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

In a possible design, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

In a possible design, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

In a possible design, the CSI-RS configuration parameter includes a quantity of CSI-RS signals to be sent by the access network device at a first level, a quantity of CSI-RSs to be sent at a second level, a sampling rate at the first level, and a sampling rate at the second level, and the receiving module specifically includes:
a first receiving unit, configured to: after the sending module sends a first CSI-RS signal to the UE based on the quantity of CSI-RS signals to be sent at the first level and a preset first beam group, receive a first beamforming parameter reported by the UE based on the quantity of CSI-RS signals to be sent at the first level, the sampling rate at the first level, and the first CSI-RS signal, where a width of a beam represented by the first beamforming parameter is less than a width of a beam in the first beam group, a quantity of beams in the first beam group is equal to a quantity of first CSI-RS signals, and all the first CSI-RS signals have a same beamforming factor;
a determining unit, configured to determine a second beam group based on the first beamforming parameter, where
the sending module is further configured to send a second CSI-RS signal to the UE based on the quantity of CSI-RS signals to be sent at the second level and the second beam group, where a width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor; and
a second receiving unit, configured to receive a second beamforming parameter reported by the UE based on the quantity of CSI-RS signals to be sent at the second level, the sampling rate at the second level, and the second CSI-RS signal, where a width of beamforming represented by the second beamforming parameter is less than the width of the beam in the second beam group.

In a possible design, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

In a possible design, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

For beneficial effects of the access network device provided in the third aspect and the possible designs of the third aspect, refer to the beneficial effects brought by the first aspect and the possible designs of the first aspect. Details are not described herein.

According to a fourth aspect, an embodiment of the present invention provides a terminal device, including a receiving module, a processing module, and a sending module, where
the receiving module is configured to receive a channel state information-reference signal CSI-RS configuration parameter sent by an access network device, where the CSI-RS configuration parameter includes a quantity of CSI-RS signals to be sent by the access network device at each level and a sampling rate at each level; and
the processing module is configured to: after the receiving module receives a CSI-RS signal at each level that is sent by the access network device, determine a beamforming parameter at each level based on the CSI-RS signal at each level and the sampling rate at each level, and report the beamforming parameter at each level to the access network device by using the sending module, where a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

In a possible design, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

In a possible design, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

In a possible design, the CSI-RS configuration parameter includes a quantity of CSI-RS signals to be sent by the access network device at a first level, a quantity of CSI-RSs to be sent at a second level, a sampling rate at the first level, and a sampling rate at the second level, and the processing module specifically includes:
a first processing unit, configured to: after the receiving module receives a first CSI-RS signal sent by the access network device based on the quantity of CSI-RS signals to be sent at the first level and a first beam group, determine a first beamforming parameter based on the quantity of CSI-RS signals to be sent at the first level, the sampling rate at the first level, and the first CSI-RS signal, and report the first beamforming parameter to the access network device by using the sending module, where a width of a beam represented by the first beamforming parameter is less than a width of a beam in the first beam group, a quantity of beams in the first beam group is equal to a quantity of first CSI-RS signals, and all the first CSI-RS signals have a same beamforming factor; and
a second processing unit, configured to: after the receiving module receives a second CSI-RS signal sent by the access network device based on the quantity of CSI-RS signals to be sent at the second level and a second beam group, determine a second beamforming parameter based on the quantity of CSI-RS signals to be sent at the second level, the sampling rate at the second level, and the second CSI-RS signal, and report the second beamforming parameter to the access network device by using the sending module, where the second beam group is determined by the access network device based on the first beamforming parameter, a width of a beam in the second beam group is less than or equal to the width of the beam represented by the first beamforming parameter, a quantity of beams in the second beam group is equal to a quantity of second CSI-RS signals, all the second CSI-RS signals have a same beamforming factor, and a width of beamforming represented by the second beamforming parameter is less than the width of the beam in the second beam group.

In a possible design, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

In a possible design, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

For beneficial effects of the terminal device provided in the fourth aspect and the possible designs of the fourth aspect, refer to the beneficial effects brought by the first aspect and the possible designs of the first aspect. Details are not described herein.

According to a fifth aspect, an embodiment of the present invention provides an access network device, including:
a transmitter, configured to send a channel state information-reference signal CSI-RS configuration parameter to a terminal device UE, where the CSI-RS configuration parameter includes a quantity of CSI-RS signals to be sent by the access network device at each level and a sampling rate at each level; and
a receiver, configured to: after the transmitter sends, based on the quantity of CSI-RS signals at each level, a CSI-RS signal corresponding to each level to the UE, receive a beamforming parameter at each level that is reported by the UE for the CSI-RS signal at each level, where the beamforming parameter at each level is determined by the UE based on the CSI-RS signal at each level and the sampling rate at each level, a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

In a possible design, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

In a possible design, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

In a possible design, the CSI-RS configuration parameter includes a quantity of CSI-RS signals to be sent by the access network device at a first level, a quantity of CSI-RSs to be sent at a second level, a sampling rate at the first level, and a sampling rate at the second level;
the receiver is specifically configured to: after the transmitter sends a first CSI-RS signal to the UE based on the quantity of CSI-RS signals to be sent at the first level and a preset first beam group, receive a first beamforming parameter reported by the UE based on the quantity of CSI-RS signals to be sent at the first level, the sampling rate at the first level, and the first CSI-RS signal, where a width of a beam represented by the first beamforming parameter is less than a width of a beam in the first beam group, a quantity of beams in the first beam group is equal to a quantity of first CSI-RS signals, and all the first CSI-RS signals have a same beamforming factor;
the transmitter is configured to send a second CSI-RS signal to the UE based on the quantity of CSI-RS signals to be sent at the second level and a second beam group determined by the processor with reference to the first beamforming parameter, where a width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor; and
the receiver is further configured to receive a second beamforming parameter reported by the UE based on the quantity of CSI-RS signals to be sent at the second level, the sampling rate at the second level, and the second CSI-RS signal, where a width of beamforming represented by the second beamforming parameter is less than the width of the beam in the second beam group.

In a possible design, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

In a possible design, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

For beneficial effects of the access network device provided in the fifth aspect and the possible designs of the fifth aspect, refer to the beneficial effects brought by the first aspect and the possible designs of the first aspect. Details are not described herein.

According to a sixth aspect, an embodiment of the present invention provides a terminal device, including: a receiver, a processor, and a transmitter, where
the receiver is configured to receive a channel state information-reference signal CSI-RS configuration parameter sent by an access network device, where the CSI-RS configuration parameter includes a quantity of CSI-RS signals to be sent by the access network device at each level and a sampling rate at each level; and
the processor is configured to: after the receiver receives a CSI-RS signal at each level that is sent by the access network device, determine a beamforming parameter at each level based on the CSI-RS signal at each level and the sampling rate at each level, and report the beamforming parameter at each level to the access network device by using the transmitter, where a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

In a possible design, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

In a possible design, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

In a possible design, the CSI-RS configuration parameter includes a quantity of CSI-RS signals to be sent by the access network device at a first level, a quantity of CSI-RSs to be sent at a second level, a sampling rate at the first level, and a sampling rate at the second level;
the processor is specifically configured to: after the receiver receives a first CSI-RS signal sent by the access network device based on the quantity of CSI-RS signals to be sent at the first level and a first beam group, determine a first beamforming parameter based on the quantity of CSI-RS signals to be sent at the first level, the sampling rate at the first level, and the first CSI-RS signal, and report the first beamforming parameter to the access network device by using the transmitter, where a width of a beam represented by the first beamforming parameter is less than a width of a beam in the first beam group, a quantity of beams in the first beam group is equal to a quantity of first CSI-RS signals, and all the first CSI-RS signals have a same beamforming factor; and
the processor is further configured to: after the receiver receives a second CSI-RS signal sent by the access network device based on the quantity of CSI-RS signals to be sent at the second level and a second beam group, determine a second beamforming parameter based on the quantity of CSI-RS signals to be sent at the second level, the sampling rate at the second level, and the second CSI-RS signal, and report the second beamforming parameter to the access network device by using the transmitter, where the second beam group is determined by the access network device based on the first beamforming parameter, a width of a beam in the second beam group is less than or equal to the width of the beam represented by the first beamforming parameter, a quantity of beams in the second beam group is equal to a quantity of second CSI-RS signals, all the second CSI-RS signals have a same beamforming factor, and a width of beamforming represented by the second beamforming parameter is less than the width of the beam in the second beam group.

In a possible design, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

In a possible design, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

For beneficial effects of the terminal device provided in the sixth aspect and the possible designs of the sixth aspect, refer to the beneficial effects brought by the first aspect and the possible designs of the first aspect. Details are not described herein.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may derive other drawings from these accompanying drawings without creative efforts.
FIG. 1 is a schematic diagram of a scenario of a mobile communications system according to an embodiment of the present invention;
FIG. 2 is a signaling flowchart of Embodiment 1 of an information transmission method according to an embodiment of the present invention;
FIG. 3 is a signaling flowchart of Embodiment 2 of an information transmission method according to an embodiment of the present invention;
FIG. 4 is a schematic diagram of feeding back a beamforming parameter according to an embodiment of the present invention;
FIG. 5 is a schematic diagram of an antenna model in a 5G mobile communications system according to an embodiment of the present invention;
FIG. 6 is a schematic diagram of sending a CSI-RS according to an embodiment of the present invention;
FIG. 7 is a schematic structural diagram of Embodiment 1 of an access network device according to an embodiment of the present invention;
FIG. 8 is a schematic structural diagram of Embodiment 2 of an access network device according to an embodiment of the present invention;
FIG. 9 is a schematic structural diagram of Embodiment 1 of a terminal device according to an embodiment of the present invention;
FIG. 10 is a schematic structural diagram of Embodiment 2 of a terminal device according to an embodiment of the present invention;
FIG. 11 is a schematic structural diagram of Embodiment 3 of an access network device according to an embodiment of the present invention; and
FIG. 12 is a schematic structural diagram of Embodiment 3 of a terminal device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention which is defined by the appended claims.

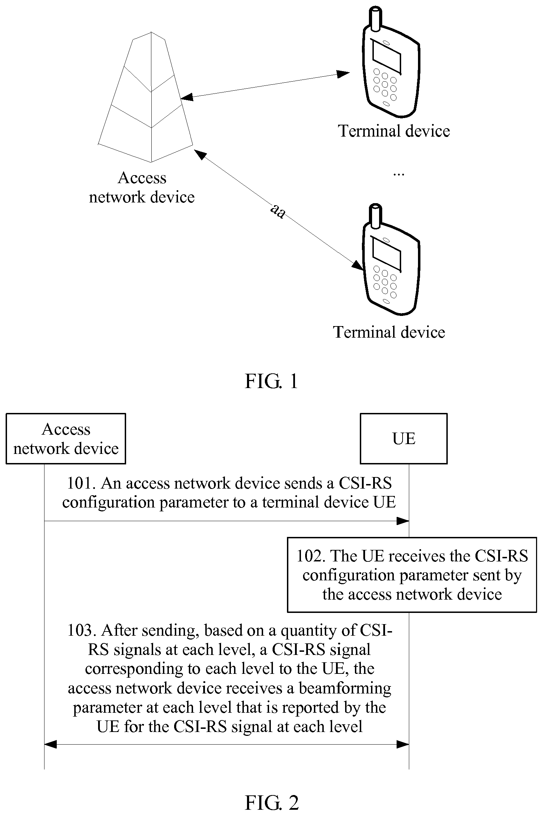

An information transmission method in the embodiments of the present invention is applicable to a downlink in any mobile communications system in which a plurality of antennas are used, for example, a 5G communications system in which a plurality of antennas are used, or a Long Term Evolution (Long Term Evolution, LTE for short) system in which a multiple-antenna system is used or an evolved version thereof; and is also applicable to sending of an uplink sounding reference signal. For example, as shown in FIG. 1, the communications system in which a plurality of antennas are used may include an access network device and at least one terminal device. The access network device delivers a CSI-RS signal to the terminal device, so that the UE performs CSI feedback for the access network device based on the CSI-RS signal. In the embodiments of the present invention, when the UE performs CSI feedback for the access network device, information that is actually fed back is a beamforming parameter, and the access network device can perform downlink data transmission based on the beamforming parameter.

Optionally, the access network device may be a base station, or may be another communications device that can communicate with the UE and that can perform downlink scheduling. Optionally, the base station in this application may be a device that communicates with a wireless terminal by using one or more sectors on an air interface in an access network. The base station may be configured to mutually convert a received over-the-air frame and an IP packet and serve as a router between the wireless terminal and a remaining part of the access network. The remaining part of the access network may include an Internet protocol (IP) network. The base station may further coordinate attribute management of the air interface. For example, the base station may be an evolved NodeB (NodeB, eNB, or e-NodeB, evolved NodeB) in LTE.

The terminal device in this application may be a wireless terminal device or a wired terminal device. The wireless terminal may be a handheld device with a wireless connection function, another processing device connected to a wireless modem, or a mobile terminal that communicates with one or more core networks by using a radio access network. For example, the wireless terminal may be a mobile phone (or referred to as a "cellular" phone) or a computer with a mobile terminal. For another example, the wireless terminal may alternatively be a portable, pocket-sized, handheld, computer built-in, or in-vehicle mobile apparatus. For still another example, the wireless terminal may be user equipment (English: user equipment, UE for short).

In the prior art, an access network device delivers CSI-RS signals to UE at two levels, and the UE performs CSI feedback for the access network device based on a CSI-RS signal delivered at each level. A basic principle of the CSI feedback is as follows: The UE performs channel estimation based on the CSI-RS signal delivered at each level, to select a CSI-RS sequence number corresponding to a CSI-RS signal with optimal signal quality, and reports the CSI-RS sequence number to a base station side. After receiving the CSI-RS signal, the UE merely performs simple beam selection. Therefore, in the prior art, the CSI-RS sequence number reported by the UE is inaccurate, in other words, a CSI-RS beamforming direction reported by the UE is inaccurate. Consequently, average frequency efficiency of a cell and frequency efficiency of a cell-edge user are reduced, and unnecessary interference between neighboring cells is caused. The method in the embodiments of the present invention is intended to resolve the foregoing problem in the prior art.

Specific embodiments are used below to describe in detail the technical solutions of the present invention. The following several specific embodiments may be combined with each other, and a same or similar concept or process may not be described repeatedly in some embodiments.

FIG. 2 is a signaling flowchart of Embodiment 1 of an information transmission method according to an embodiment of the present invention. This embodiment relates to a specific process in which an access network device delivers a CSI-RS configuration parameter and a CSI-RS signal to UE so that the UE can obtain, through calculation based on the CSI-RS parameter and a CSI-RS signal delivered at each level, a beamforming parameter corresponding to each level and report the beamforming parameter to the access network device. In this embodiment, a width of a beam represented by the beamforming parameter reported by the UE at each level is less than a width of beamforming used by the UE to deliver the CSI-RS signal at the level, to be specific, the beam represented by the beamforming parameter reported by the UE to the access network device has a more accurate direction and is more directive. Therefore, the access network device performs more accurate downlink data transmission, thereby avoiding interference between neighboring cells.

As shown in FIG. 2, the method includes the following steps.

S101. The access network device sends a CSI-RS configuration parameter to the terminal device UE.

The CSI-RS configuration parameter includes a quantity of CSI-RS signals to be sent by the access network device at each level and a sampling rate at each level.

S102. The UE receives the CSI-RS configuration parameter sent by the access network device.

Specifically, before sending a CSI-RS signal to the UE, the access network device sends the CSI-RS configuration parameter to the UE. The CSI-RS configuration parameter includes the quantity of CSI-RS signals to be sent by the access network device at each level and the sampling rate at each level. The UE may learn of, based on the CSI-RS parameter, a quantity of levels that need to be used by the access network device to deliver CSI-RS signals and the quantity of CSI-RS signals delivered at each level, so that the UE can accurately receive all the CSI-RS signals at each level.

S103. After sending, based on a quantity of CSI-RS signals at each level, a CSI-RS signal corresponding to each level to the UE, the access network device receives a beamforming parameter at each level that is reported by the UE for the CSI-RS signal at each level.

The beamforming parameter at each level is determined by the UE based on the CSI-RS signal at each level and the sampling rate at each level. A width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

Specifically, after the access network device sends the CSI-RS configuration parameter to the UE, the access network device may send, based on the quantity of the CSI-RS signals at each level that is in the CSI-RI configuration parameter, the CSI-RS signal corresponding to each level to the UE. To be specific, the access network device sends the CSI-RS signals to the UE at levels, and for the CSI-RS signal delivered at each level, the UE reports the beamforming parameter for the CSI-RS signal at the level. The beamforming parameter is determined by the UE based on the CSI-RS signal at the level and the sampling rate at the level. For example, the UE may determine a precoding codebook based on the quantity of CSI-RS signals at the level and the sampling rate at the level, select a beamforming vector (the beamforming vector may be one type of the beamforming parameter) with a maximum downlink transmission rate from the precoding codebook, and feed back a beam vector sequence number to the access network device. For a specific process of determining, by the UE, the beamforming parameter at the level based on the CSI-RS signal at the level and the sampling rate at the level, refer to descriptions in the prior art. This is not limited in this embodiment of the present invention.

The access network device delivers the CSI-RS signals at levels, and therefore the UE reports beamforming parameters to the access network device at levels for the CSI-RS signals delivered at levels. A simple example may be used herein. For example, when the CSI-RS configuration parameter includes a quantity of CSI-RS signals to be sent by the access network device at a first level, a quantity of CSI-RS signals to be sent at a second level, a quantity of CSI-RS signals to be sent at a third level, a sampling rate at the first level, a sampling rate at the second level, and a sampling rate at the third level, when delivering corresponding CSI-RS signals to the UE, the access network device first delivers a CSI-RS signal at the first level to the UE based on the quantity of CSI-RS signals at the first level, then delivers a CSI-RS signal at the second level to the UE after receiving a beamforming parameter at the first level that is reported by the UE based on the quantity of CSI-RS signals at the first level and the sampling rate at the first level, and then delivers a CSI-RS signal at the third level to the UE after receiving a beamforming parameter at the second level that is reported by the UE based on the quantity of CSI-RS signals at the second level and the sampling rate at the second level, to obtain a beamforming parameter at the third level that is reported by the UE based on the quantity of CSI-RS signals at the third level and the sampling rate at the third level. In other words, in this embodiment of the present invention, delivery of the CSI-RS signal at each level is corresponding to reporting of the beamforming parameter at the level.

It should be noted that in this embodiment of the present invention, the CSI-RS signal at each level that is delivered by the access network device to the UE is a signal obtained after beamforming. Optionally, all CSI-RS signals delivered at each level have a same beamforming factor. Optionally, when delivering the CSI-RS signal at each level, the access network device may further perform a sweeping operation on the CSI-RS signal, to obtain a plurality of groups of CSI-RS signals. All CSI-RS signals in each group have a same beamforming factor, but CSI-RS signals in adjacent groups may have different beamforming factors.

In addition, it should be noted that the width of the beam represented by the beamforming parameter at each level is less than the width of the beamforming used for delivering the CSI-RS signal at the level, and the width of the beamforming used for delivering the CSI-RS signal at the current level is less than or equal to the width of the beam represented by the beamforming parameter reported at the previous level. The foregoing example continues to be used herein for description. To be specific, a width of a beam (which is set to a beam a) represented by the beamforming parameter at the first level that is reported by the UE is less than a width of beamforming (which is set to a beam A) used by the access network device to deliver the CSI-RS signal at the first level, a width of a beam (which is set to a beam b) represented by the beamforming parameter at the second level that is reported by the UE is less than a width of beamforming (which is set to a beam B) used by the access network device to deliver the CSI-RS signal at the second level, and a width of a beam (which is set to a beam c) represented by the beamforming parameter at the third level that is reported by the UE is less than a width of beamforming (which is set to a beam group C) used by the access network device to deliver the CSI-RS signal at the third level. In addition, the width of the beamforming (namely, the beam B) used by the access network device to deliver the CSI-RS signal at the second level is less than or equal to the width of the beam (namely, the beam a) represented by the beamforming parameter reported by the UE at the first level, and the width of the beamforming (namely, the beam C) used by the access network device to deliver the CSI-RS signal at the third level is less than or equal to the width of the beam (namely, the beam b) represented by the beamforming parameter reported by the UE at the second level. A specific relationship is "the width of the beam A">"the width of the beam a"≥"the width of the beam B">"the width of the beam b"≥"the width of the beam C">"the width of the beam c". It may be learned that in the entire process in which delivery and reporting are performed at levels, widths of used beams gradually decrease, the beam (namely, the beam c) represented by the beamforming parameter finally reported to the access network device has a minimum width, and the beam has an accurate beam direction, and is directive. Therefore, when the access network device performs downlink data transmission, interference between neighboring cells can be obviously avoided, and average frequency efficiency of a cell and frequency efficiency of a cell-edge user are greatly improved.

However, in the prior art, UE merely performs simple beam selection based on CSI-RS signals delivered by an access network device at levels. To be specific, the UE selects, from beams used to deliver the CSI-RS signals, a beam corresponding to a CSI-RS signal with high signal quality, and reports a sequence number of the beam to the access network device, in other words, a width of a beam used to deliver a CSI-RS signal at a level is the same as a width of a beam reported to the access network device at the same level. Consequently, a beam finally reported to the access network device still has a relatively large width, and is not directive. For example, in the prior art, CSI-RS signals are delivered at two levels, and CSI-RS sequence numbers are reported at two levels. It is assumed that the access network device performs beamforming on CSI-RS signals at a first level by using a first beam group (the first beam group includes different beams), and then delivers the CSI-RS signals, where all the CSI-RS signals delivered at the first level have different beamforming factors. The UE then selects, based on the CSI-RS signals at the first level, a beam (it is assumed that the beam is a beam D in the first beam group) corresponding to a CSI-RS signal with optimal signal quality, and reports the beam to the access network device. The access network device then determines a relatively narrow second beam group based on the beam D to continue to deliver a CSI-RS signal at a second level. The UE selects a beam E from the second beam group based on a same process. A width of the beam E is less than a width of the beam D. The beam D reported at the first level and the beam D used to deliver a CSI-RS signal at the first level have a same width, and the beam E reported at the second level and the beam E used to deliver a CSI-RS signal at the second level have a same width. Therefore, there is only one beam width decrease process (to be specific, the width of the beam E is less than the width of the beam D) in the prior art. However, in this embodiment of the present invention, the foregoing example is used. There is one beam width decrease process (to be specific, "the width of the beam A">"the width of the beam a") in a process from delivery at the first level to reporting at the first level, there may be one beam width decrease process ("the width of the beam a"≥"the width of the beam B") in a process from reporting at the first level to delivery at the second level, and there is also one beam width decrease process ("the width of the beam B">"the width of the beam b") in a process from delivery at the second level to reporting at the second level. Therefore, there are a plurality of beam width decrease processes in this embodiment of the present invention. Therefore, the width of the beam finally reported to the access network device in this embodiment of the present invention is far less than the width of the beam finally reported by the UE to the access network device in the prior art, and the beam has a more accurate beam direction. Therefore, when the access network device performs downlink data transmission, interference between neighboring cells can be obviously avoided, and average frequency efficiency of a cell and frequency efficiency of a cell-edge user are greatly improved.

According to the information transmission method provided in this embodiment of the present invention, the access network device sends, to the UE, the CSI-RS configuration parameter that includes the quantity of CSI-RS signals at each level and the sampling rate at each level, and after sending, based on the quantity of CSI-RS signals at each level, the CSI-RS signal corresponding to each level to the UE, the access network device receives the beamforming parameter at each level that is reported by the UE for the CSI-RS signal at each level. The UE may calculate an accurate beamforming parameter based on the CSI-RS configuration parameter and the CSI-RS signal delivered at each level, the width of the beam represented by the beamforming parameter at each level is less than the width of the beamforming used for delivering the CSI-RS signal at each level, and the width of the beamforming used for delivering the CSI-RS signal at the current level is less than or equal to the width of the beam represented by the beamforming parameter reported at the previous level. Therefore, there may be a plurality of beam width decrease processes in this embodiment of the present invention, so that the width of the beam represented by the beamforming parameter finally reported by the UE to the access network device is far less than the width of the beam reported by the UE to the access network device at the second level in the prior art, accuracy of the beam direction is greatly improved, and the beam is more directive. Therefore, when the access network device performs downlink data transmission, interference between neighboring cells can be obviously avoided, and average frequency efficiency of a cell and frequency efficiency of a cell-edge user are greatly improved.

Optionally, the quantity of the CSI-RS signals to be sent at each level that is in the CSI-RS configuration parameter may include a quantity of CSI-RS signals that have a same polarization direction in a horizontal direction and a quantity of CSI-RS signals that have a same polarization direction in a vertical direction, and the sampling rate at each level may include a sampling rate in the horizontal direction and a sampling rate in the vertical direction.

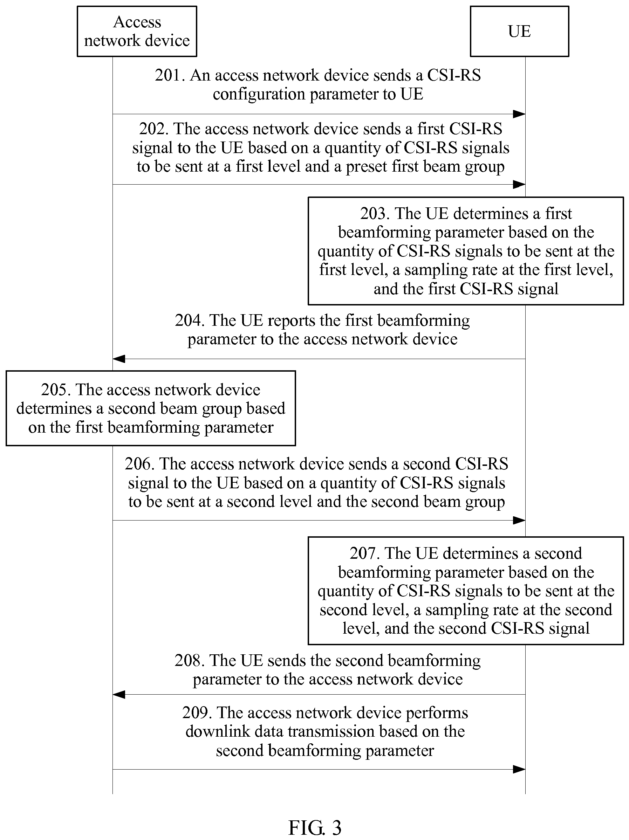

FIG. 3 is a signaling flowchart of Embodiment 2 of an information transmission method according to an embodiment of the present invention. In this embodiment, a CSI-RS configuration parameter includes a quantity of CSI-RS signals to be sent by the access network device at a first level, a quantity of CSI-RSs to be sent at a second level, a sampling rate at the first level, and a sampling rate at the second level. This embodiment relates to a specific process in which the access network device delivers CSI-RS signals at two levels and UE reports beamforming parameters at two levels to improve accuracy of a beam direction reported to a base station. Based on the foregoing embodiment, as shown in FIG. 3, the method includes the following steps.

S201. The access network device sends a CSI-RS configuration parameter to the UE.

The CSI-RS configuration parameter includes a quantity of CSI-RS signals to be sent by the access network device at a first level, a quantity of CSI-RSs to be sent at a second level, a sampling rate at the first level, and a sampling rate at the second level.

Specifically, in the CSI-RS configuration parameter, the quantity of CSI-RS signals to be sent at the first level includes a quantity of CSI-RS signals that are to be sent at the first level and that have a same polarization direction in a horizontal direction and a quantity of CSI-RS signals that are to be sent at the first level and that have a same polarization direction in a vertical direction, the sampling rate at the first level includes a sampling rate of a CSI-RS signal at the first level in the horizontal direction and a sampling rate of a CSI-RS signal at the first level in the vertical direction, the quantity of CSI-RS signals to be sent at the second level includes a quantity of CSI-RS signals that are to be sent at the second level and that have a same polarization direction in a horizontal direction and a quantity of CSI-RS signals that are to be sent at the second level and that have a same polarization direction in a vertical direction, and the sampling rate at the second level includes a sampling rate of a CSI-RS signal at the second level in the horizontal direction and a sampling rate of a CSI-RS signal at the second level in the vertical direction.

S202. The access network device sends a first CSI-RS signal to the UE based on a quantity of CSI-RS signals to be sent at a first level and a preset first beam group.

A quantity of beams in the first beam group is equal to a quantity of first CSI-RS signals, and all the first CSI-RS signals have a same beamforming factor.

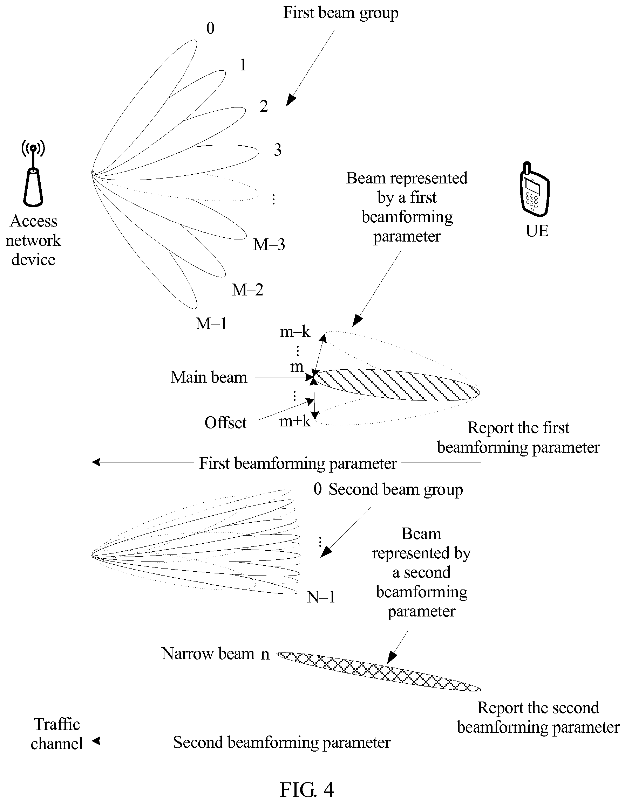

Specifically, when sending the CSI-RS signal at the first level to the UE, the access network device needs to perform beamforming on the to-be-sent CSI-RS signal at the first level, in other words, perform beamforming on the to-be-sent CSI-RS signal by using a beam in the preset first beam group. Each to-be-sent CSI-RS signal becomes the first CSI-RS signal after the beamforming, and all the first CSI-RS signals have the same beamforming factor. The access network device then sends all the first CSI-RS signals to the UE with reference to the quantity of CSI-RS signals to be sent at the first level. For ease of description, it is assumed that the first beam group includes M beams, and a width of each beam is P, as shown in a schematic diagram of feeding back a beamforming parameter in FIG. 4.

S203. The UE determines a first beamforming parameter based on the quantity of CSI-RS signals to be sent at the first level, a sampling rate at the first level, and the first CSI-RS signal.

S204. The UE reports the first beamforming parameter to the access network device.

A width of a beam represented by the first beamforming parameter is less than a width of the beam in the first beam group.

Specifically, after receiving the first CSI-RS signal sent by the access network device, the UE determines the first beamforming parameter with reference to the quantity of CSI-RS signals to be sent at the first level, the sampling rate at the first level, and all the first CSI-RS signals, and reports the first beamforming parameter to the access network device. The width of the beam represented by the determined first beamforming parameter is less than the width of the beam in the first beam group. Therefore, it may be learned that there is one beam width decrease process herein.

It should be noted that for a specific process of determining the first beamforming parameter, refer to the prior art. Details are not described herein.

Optionally, when reporting the first beamforming parameter, the UE may send the first beamforming parameter through a channel such as a downlink broadcast channel or a control channel. The first beamforming parameter may include an identifier i1,1 of a first main beam in a horizontal antenna direction, an identifier i1,2 of a second main beam in a vertical antenna direction, an offset Δi1,1 relative to the first main beam in the horizontal antenna direction, and an offset Δi1,1 relative to the second main beam in the vertical antenna direction. The first beamforming parameter may represent a group of beams, and a width (which is set to p) of each beam in the group of beams represented by the first beamforming parameter is less than the width P of the beam in the first beam group. As shown in FIG. 4, m in FIG. 4 is an identifier of a main beam (the first main beam or the second main beam), and k is an offset relative to the main beam.

S205. The access network device determines a second beam group based on the first beamforming parameter.

A width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor.

Specifically, after receiving the first beamforming parameter reported by the UE, the access network device determines the second beam group based on the beam represented by the first beamforming parameter, in other words, the second beam group is related to the first beamforming parameter, and the width of the beam in the second beam group is less than or equal to the width of the beam represented by the first beamforming parameter. Therefore, when the width (which is set to Q) of the beam in the second beam group determined by the access network device is less than the width p of the beam represented by the first beamforming parameter, there is also one beam width decrease process herein.

S206. The access network device sends a second CSI-RS signal to the UE based on a quantity of CSI-RS signals to be sent at a second level and the second beam group.

Similarly, after the access network device determines the second beam group, the access network device performs beamforming on a to-be-sent CSI-RS signal at the second level by using a beam in the second beam group. Each to-be-sent CSI-RS signal becomes the second CSI-RS signal after the beamforming, and all the second CSI-RS signals have the same beamforming factor. The access network device then sends all the second CSI-RS signals to the UE with reference to the quantity of CSI-RS signals to be sent at the second level. For ease of description, it is assumed that the second beam group includes N beams, and a width of each beam is Q, as shown in the schematic diagram of feeding back a beamforming parameter in FIG. 4.

S207. The UE determines a second beamforming parameter based on the quantity of CSI-RS signals to be sent at the second level, a sampling rate at the second level, and the second CSI-RS signal.

A width of beamforming represented by the second beamforming parameter is less than the width of the beam in the second beam group.

S208. The UE sends the second beamforming parameter to the access network device.

Specifically, after receiving the second CSI-RS signal sent by the access network device, the UE determines the second beamforming parameter with reference to the quantity of CSI-RS signals to be sent at the second level, the sampling rate at the second level, and all the second CSI-RS signals, and reports the second beamforming parameter to the access network device. The width (which is set to q) of the beam represented by the determined second beamforming parameter is less than the width Q of the beam in the second beam group. Therefore, it may be learned that there is also one beam width decrease process herein.

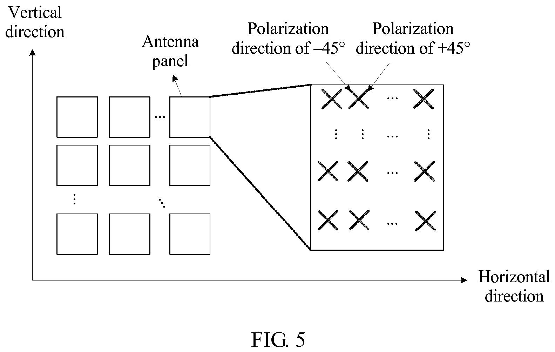

It should be noted that for a specific process of determining the second beamforming parameter, refer to the prior art. Details are not described herein. Optionally, when reporting the second beamforming parameter, the UE may send the second beamforming parameter through a downlink traffic channel. The second beamforming parameter may include an identifier i2,1 of a beam in the horizontal antenna direction, an identifier i2,2 of a beam in the vertical antenna direction, and a phase difference i2,c in two antenna polarization directions. The second beamforming parameter represents a narrow beam n, to be specific, the identifier of the beam in the horizontal antenna direction and the identifier of the beam in the vertical antenna direction are identifiers of the narrow beam, as shown in FIG. 4. Optionally, in a 5G mobile communications system, for an antenna model, refer to FIG. 5.

S209. The access network device performs downlink data transmission based on the second beamforming parameter.

It may be learned from the foregoing descriptions that in this embodiment of the present invention, "the width P of the beam in the first beam group">"the width p of the beam represented by the first beamforming parameter"≥"the width Q of the beam in the second beam group">"the width q of the beam represented by the second beamforming parameter". To be specific, when the access network device delivers the CSI-RS signals at two levels, and the UE reports the beamforming parameters at two levels, there are a plurality of beam width decrease processes, so that the width of the beam represented by the second beamforming parameter finally reported by the UE to the access network device is far less than a width of a beam reported by UE to an access network device at a second level in the prior art, accuracy of a beam direction is greatly improved, and the beam is more directive. Therefore, when the access network device performs downlink data transmission, interference between neighboring cells can be obviously avoided, and average frequency efficiency of a cell and frequency efficiency of a cell-edge user are greatly improved.

According to the information transmission method provided in this embodiment of the present invention, the access network device sends, to the UE, the CSI-RS configuration parameter that includes a quantity of CSI-RS signals at each level and a sampling rate at each level, and then sends the first CSI-RS signal to the UE based on the quantity of CSI-RS signals to be sent at the first level and the preset first beam group, so that the UE determines the first beamforming parameter based on the quantity of CSI-RS signals to be sent at the first level, the sampling rate at the first level, and the first CSI-RS signal, and reports the first beamforming parameter to the access network device, and the access network device then determines the second beam group based on the first beamforming parameter, and sends the second CSI-RS signal to the UE based on the quantity of CSI-RS signals to be sent at the second level and the second beam group, so that the UE determines the second beamforming parameter based on the quantity of CSI-RS signals to be sent at the second level, the sampling rate at the second level, and the second CSI-RS signal, and reports the second beamforming parameter to the access network device. The UE may calculate an accurate beamforming parameter based on the CSI-RS configuration parameter and a CSI-RS signal delivered at each level, a width of a beam represented by a beamforming parameter at each level is less than a width of beamforming used for delivering a CSI-RS signal at each level, and a width of beamforming used for delivering a CSI-RS signal at a current level is less than or equal to a width of a beam represented by a beamforming parameter reported at a previous level. Therefore, there may be a plurality of beam width decrease processes in this embodiment of the present invention, so that the width of the beam represented by the beamforming parameter finally reported by the UE to the access network device is far less than the width of the beam reported by the UE to the access network device at the second level in the prior art, accuracy of the beam direction is greatly improved, and the beam is more directive. Therefore, when the access network device performs downlink data transmission, interference between neighboring cells can be obviously avoided, and average frequency efficiency of a cell and frequency efficiency of a cell-edge user are greatly improved.

Optionally, the CSI-RS configuration parameter may further include a CSI-RS send window parameter, the CSI-RS send window parameter is used to represent a sending manner of a CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window. With reference to the embodiment shown in FIG. 3, the CSI-RS signal at the first level may be sent by using the time domain window, or may be sent by using the frequency domain window, and the CSI-RS signal at the second level may be sent by using the time domain window, or may be sent by using the frequency domain window. Optionally, the CSI-RS signals at the first level may be sent in a same sending manner or different sending manners.

In a possible implementation of this embodiment, the access network device may send the CSI-RS signal at the first level in the time domain window, and send the CSI-RS signal at the second level in the frequency domain window, in other words, the CSI-RS send window parameter includes a first send window parameter and a second send window parameter. The first send window parameter includes a start sending symbol or subframe Tstart of a CSI-RS signal in time domain, a symbol or subframe offset Toffset of the CSI-RS signal in time domain, and a total quantity Ttotal of symbols or subframes occupied by the CSI-RS signal in time domain, and is used to indicate, to the UE, that the access network device sends the CSI-RS signal at the first level by using the time domain window. The second send window parameter includes a start sending subcarrier, resource block, or sub-band Fstart of a CSI-RS signal in frequency domain, a subcarrier, resource block, or sub-band offset Foffset of the CSI-RS signal in frequency domain, and a total quantity Ftotal of subcarriers, resource blocks, or sub-bands occupied by the CSI-RS signal in frequency domain, and is used to indicate, to the UE, that the access network device sends the CSI-RS signal at the second level by using the frequency domain window.

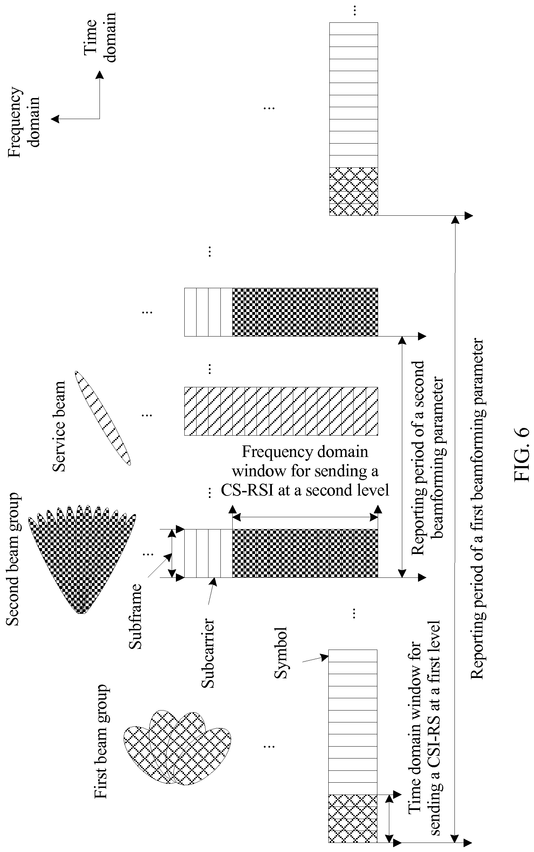

For details, refer to a schematic diagram of sending a CSI-RS in FIG. 6. In FIG. 6, a CSI-RS signal at a first level is sent in a time domain window, and a sending period is relatively long. Because a beam used to perform beamforming on the CSI-RS signal at the first level is relatively wide, when all CSI-RS signals are sent in a time division manner, all transmit power may be concentrated on a beam corresponding to a CSI-RS signal for forming, and therefore coverage performance of the CSI-RS signal at the first level can be enhanced. In addition, in FIG. 6, CSI-RS signals at a second level are sent in a same subframe in a frequency division manner. In this manner, a channel change is small, and a sending period is relatively short. Because a beam used to perform beamforming on a CSI-RS signal at the second level is relatively narrow, forming gains in this manner are large. Therefore, each CSI-RS signal may occupy several subcarriers in the same subframe for sending, so that fast channel measurement can be implemented in one subframe, facilitating traffic channel sending, and improving a traffic channel transmission rate.

According to the information transmission method provided in this embodiment of the present invention, the access network device sends the CSI-RS signal at the first level in the time domain window, and sends the CSI-RS signal at the second level in the frequency domain window. Therefore, not only the coverage performance of the CSI-RS signal at the first level can be enhanced, but also a measurement rate of the CSI-RS signal at the second level can be accelerated, thereby improving channel measurement accuracy, and improving a traffic channel transmission rate.

Persons of ordinary skill in the art may understand that all or some of the steps of the method embodiments may be implemented by a program instructing related hardware. The program may be stored in a computer readable storage medium. When the program runs, the steps of the method embodiments are performed. The storage medium includes any medium that can store program code, such as a ROM, a RAM, a magnetic disk, or an optical disc.

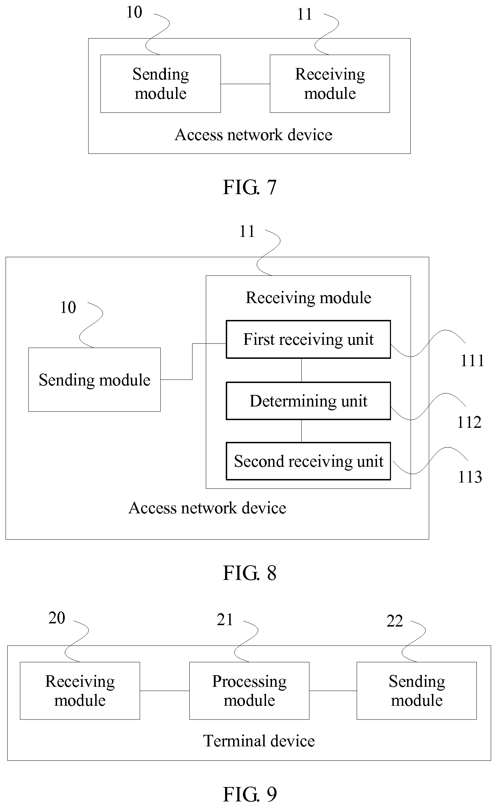

FIG. 7 is a schematic structural diagram of Embodiment 1 of an access network device according to an embodiment of the present invention. The access network device may execute the foregoing method embodiments. As shown in FIG. 7, the access network device may include a sending module 10 and a receiving module 11.

The sending module 10 is configured to send a channel state information-reference signal CSI-RS configuration parameter to a terminal device UE. The CSI-RS configuration parameter includes a quantity of CSI-RS signals to be sent by the access network device at each level and a sampling rate at each level.

The receiving module 11 is configured to: after the sending module 10 sends, based on the quantity of CSI-RS signals at each level, a CSI-RS signal corresponding to each level to the UE, receive a beamforming parameter at each level that is reported by the UE for the CSI-RS signal at each level. The beamforming parameter at each level is determined by the UE based on the CSI-RS signal at each level and the sampling rate at each level, a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

The sending module 10 may be implemented by corresponding hardware or software, for example, may be implemented by a transmitter, a transmit antenna, or a transmitter chip. The receiving module 11 may be implemented by corresponding hardware or software, for example, may be implemented by a receiver, a receive antenna, or a receiver chip. This is not limited in this embodiment of the present invention.

The access network device provided in this embodiment of the present invention may execute the foregoing method embodiments, and an implementation principle and a technical effect thereof are similar. Details are not described herein.

Optionally, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

Optionally, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

FIG. 8 is a schematic structural diagram of Embodiment 2 of an access network device according to an embodiment of the present invention. In this embodiment, the CSI-RS configuration parameter includes a quantity of CSI-RS signals to be sent by the access network device at a first level, a quantity of CSI-RSs to be sent at a second level, a sampling rate at the first level, and a sampling rate at the second level. Based on the foregoing embodiment, the receiving module 11 specifically includes a first receiving unit 111, a determining unit 112, and a second receiving unit 113.

The first receiving unit 111 is configured to: after the sending module 10 sends a first CSI-RS signal to the UE based on the quantity of CSI-RS signals to be sent at the first level and a preset first beam group, receive a first beamforming parameter reported by the UE based on the quantity of CSI-RS signals to be sent at the first level, the sampling rate at the first level, and the first CSI-RS signal. A width of a beam represented by the first beamforming parameter is less than a width of a beam in the first beam group, a quantity of beams in the first beam group is equal to a quantity of first CSI-RS signals, and all the first CSI-RS signals have a same beamforming factor.

The determining unit 112 is configured to determine a second beam group based on the first beamforming parameter.

The sending module 10 is further configured to send a second CSI-RS signal to the UE based on the quantity of CSI-RS signals to be sent at the second level and the second beam group. A width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor.

The second receiving unit 113 is configured to receive a second beamforming parameter reported by the UE based on the quantity of CSI-RS signals to be sent at the second level, the sampling rate at the second level, and the second CSI-RS signal. A width of beamforming represented by the second beamforming parameter is less than the width of the beam in the second beam group.

Further, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

Optionally, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

The access network device provided in this embodiment of the present invention may execute the foregoing method embodiments, and an implementation principle and a technical effect thereof are similar. Details are not described herein.

FIG. 9 is a schematic structural diagram of Embodiment 1 of a terminal device according to an embodiment of the present invention. As shown in FIG. 9, the terminal device includes a receiving module 20, a processing module 21, and a sending module 22.

Specifically, the receiving module 20 is configured to receive a channel state information-reference signal CSI-RS configuration parameter sent by an access network device. The CSI-RS configuration parameter includes a quantity of CSI-RS signals to be sent by the access network device at each level and a sampling rate at each level.

The processing module 21 is configured to: after the receiving module 20 receives a CSI-RS signal at each level that is sent by the access network device, determine a beamforming parameter at each level based on the CSI-RS signal at each level and the sampling rate at each level, and report the beamforming parameter at each level to the access network device by using the sending module 22. A width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

The sending module 22 may be implemented by corresponding hardware or software, for example, may be implemented by a transmitter, a transmit antenna, or a transmitter chip. The receiving module 20 may be implemented by corresponding hardware or software, for example, may be implemented by a receiver, a receive antenna, or a receiver chip. This is not limited in this embodiment of the present invention. The processing module 21 may be implemented by a corresponding processor or processing chip in the terminal device.

The terminal device provided in this embodiment of the present invention may execute the foregoing method embodiments, and an implementation principle and a technical effect thereof are similar. Details are not described herein.

Optionally, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

Optionally, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

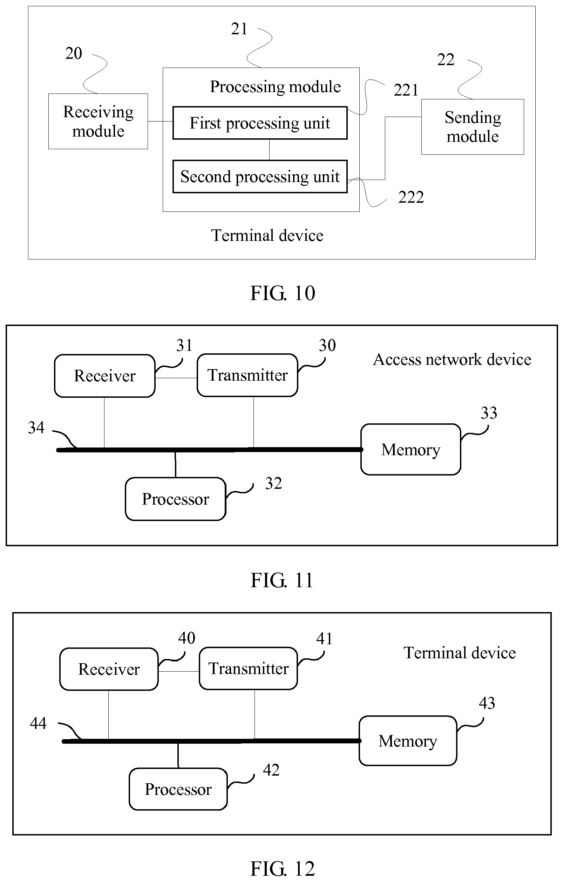

FIG. 10 is a schematic structural diagram of Embodiment 2 of a terminal device according to an embodiment of the present invention. In this embodiment, the CSI-RS configuration parameter includes a quantity of CSI-RS signals to be sent by the access network device at a first level, a quantity of CSI-RSs to be sent at a second level, a sampling rate at the first level, and a sampling rate at the second level. Based on the foregoing embodiment, as shown in FIG. 10, the processing module 21 specifically includes a first processing unit 221 and a second processing unit 222.

The first processing unit 221 is configured to: after the receiving module 20 receives a first CSI-RS signal sent by the access network device based on the quantity of CSI-RS signals to be sent at the first level and a first beam group, determine a first beamforming parameter based on the quantity of CSI-RS signals to be sent at the first level, the sampling rate at the first level, and the first CSI-RS signal, and report the first beamforming parameter to the access network device by using the sending module 22. A width of a beam represented by the first beamforming parameter is less than a width of a beam in the first beam group, a quantity of beams in the first beam group is equal to a quantity of first CSI-RS signals, and all the first CSI-RS signals have a same beamforming factor.

The second processing unit 222 is configured to: after the receiving module 20 receives a second CSI-RS signal sent by the access network device based on the quantity of CSI-RS signals to be sent at the second level and a second beam group, determine a second beamforming parameter based on the quantity of CSI-RS signals to be sent at the second level, the sampling rate at the second level, and the second CSI-RS signal, and report the second beamforming parameter to the access network device by using the sending module 22. The second beam group is determined by the access network device based on the first beamforming parameter, a width of a beam in the second beam group is less than or equal to the width of the beam represented by the first beamforming parameter, a quantity of beams in the second beam group is equal to a quantity of second CSI-RS signals, all the second CSI-RS signals have a same beamforming factor, and a width of beamforming represented by the second beamforming parameter is less than the width of the beam in the second beam group.

Further, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

Optionally, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

The terminal device provided in this embodiment of the present invention may execute the foregoing method embodiments, and an implementation principle and a technical effect thereof are similar. Details are not described herein.

FIG. 11 is a schematic structural diagram of Embodiment 3 of an access network device according to an embodiment of the present invention. As shown in FIG. 11, the access network device may include a transmitter 30, a receiver 31, a processor 32, a memory 33, and at least one communications bus 34. The communications bus 34 is configured to implement a communication connection between components. The memory 33 may include a high-speed RAM memory, and may further include a nonvolatile memory NVM, for example, at least one magnetic disk memory. The memory 33 may store various programs, to complete various processing functions and implement the method steps in the embodiments. Optionally, the receiver 31 in this embodiment may be a radio frequency module or a baseband module in the access network device, and the transmitter 30 in this embodiment may also be the radio frequency module or the baseband module in the access network device. Optionally, the transmitter 30 and the receiver 31 may be integrated into a transceiver.

In this embodiment, the transmitter 30 is configured to send a channel state information-reference signal CSI-RS configuration parameter to a terminal device UE. The CSI-RS configuration parameter includes a quantity of CSI-RS signals to be sent by the access network device at each level and a sampling rate at each level.

The receiver 31 is configured to: after the transmitter 30 sends, based on the quantity of CSI-RS signals at each level, a CSI-RS signal corresponding to each level to the UE, receive a beamforming parameter at each level that is reported by the UE for the CSI-RS signal at each level. The beamforming parameter at each level is determined by the UE based on the CSI-RS signal at each level and the sampling rate at each level, a width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

Optionally, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

Optionally, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

Optionally, the CSI-RS configuration parameter includes a quantity of CSI-RS signals to be sent by the access network device at a first level, a quantity of CSI-RSs to be sent at a second level, a sampling rate at the first level, and a sampling rate at the second level.

The receiver 31 is specifically configured to: after the transmitter 30 sends a first CSI-RS signal to the UE based on the quantity of CSI-RS signals to be sent at the first level and a preset first beam group, receive a first beamforming parameter reported by the UE based on the quantity of CSI-RS signals to be sent at the first level, the sampling rate at the first level, and the first CSI-RS signal. A width of a beam represented by the first beamforming parameter is less than a width of a beam in the first beam group, a quantity of beams in the first beam group is equal to a quantity of first CSI-RS signals, and all the first CSI-RS signals have a same beamforming factor.

The transmitter 30 is configured to send a second CSI-RS signal to the UE based on the quantity of CSI-RS signals to be sent at the second level and a second beam group determined by the processor 32 with reference to the first beamforming parameter. A width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor.

The receiver 31 is further configured to receive a second beamforming parameter reported by the UE based on the quantity of CSI-RS signals to be sent at the second level, the sampling rate at the second level, and the second CSI-RS signal. A width of beamforming represented by the second beamforming parameter is less than the width of the beam in the second beam group.

Further, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

Optionally, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

The access network device provided in this embodiment of the present invention may execute the foregoing method embodiments, and an implementation principle and a technical effect thereof are similar. Details are not described herein.

FIG. 12 is a schematic structural diagram of Embodiment 3 of a terminal device according to an embodiment of the present invention. As shown in FIG. 12, the terminal device may include a receiver 40, a transmitter 41, a processor 42, a memory 43, and at least one communications bus 44. The communications bus 44 is configured to implement a communication connection between components. The memory 43 may include a high-speed RAM memory, and may further include a nonvolatile memory NVM, for example, at least one magnetic disk memory. The memory 43 may store various programs, to complete various processing functions and implement the method steps in the embodiments. Optionally, the receiver 40 in this embodiment may be a radio frequency module or a baseband module in the access network device, and the transmitter 41 in this embodiment may also be the radio frequency module or the baseband module in the access network device. Optionally, the transmitter 41 and the receiver 40 may be integrated into a transceiver.

In this embodiment, the receiver 40 is configured to receive a channel state information-reference signal CSI-RS configuration parameter sent by an access network device. The CSI-RS configuration parameter includes a quantity of CSI-RS signals to be sent by the access network device at each level and a sampling rate at each level.

The processor 42 is configured to: after the receiver 40 receives a CSI-RS signal at each level that is sent by the access network device, determine a beamforming parameter at each level based on the CSI-RS signal at each level and the sampling rate at each level, and report the beamforming parameter at each level to the access network device by using the transmitter 41. A width of a beam represented by the beamforming parameter at each level is less than a width of beamforming used for delivering the CSI-RS signal at each level, and a width of beamforming used for delivering a CSI-RS signal at a current level is less than or equal to a width of a beam represented by a beamforming parameter reported at a previous level.

Optionally, the quantity of CSI-RS signals to be sent at each level includes a quantity of CSI-RS signals that have a same polarization direction in a horizontal direction and a quantity of CSI-RS signals that have a same polarization direction in a vertical direction, and the sampling rate at each level includes a sampling rate in the horizontal direction and a sampling rate in the vertical direction.

Optionally, the CSI-RS configuration parameter further includes a CSI-RS send window parameter, the CSI-RS send window parameter is used to represent a sending manner of the CSI-RS signal at each level, and the sending manner includes at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

Optionally, the CSI-RS configuration parameter includes a quantity of CSI-RS signals to be sent by the access network device at a first level, a quantity of CSI-RSs to be sent at a second level, a sampling rate at the first level, and a sampling rate at the second level.

The processor 42 is specifically configured to: after the receiver 40 receives a first CSI-RS signal sent by the access network device based on the quantity of CSI-RS signals to be sent at the first level and a first beam group, determine a first beamforming parameter based on the quantity of CSI-RS signals to be sent at the first level, the sampling rate at the first level, and the first CSI-RS signal, and report the first beamforming parameter to the access network device by using the transmitter 41. A width of a beam represented by the first beamforming parameter is less than a width of a beam in the first beam group, a quantity of beams in the first beam group is equal to a quantity of first CSI-RS signals, and all the first CSI-RS signals have a same beamforming factor.

The processor 42 is further configured to: after the receiver 40 receives a second CSI-RS signal sent by the access network device based on the quantity of CSI-RS signals to be sent at the second level and a second beam group, determine a second beamforming parameter based on the quantity of CSI-RS signals to be sent at the second level, the sampling rate at the second level, and the second CSI-RS signal, and report the second beamforming parameter to the access network device by using the transmitter 41. The second beam group is determined by the access network device based on the first beamforming parameter, a width of a beam in the second beam group is less than or equal to the width of the beam represented by the first beamforming parameter, a quantity of beams in the second beam group is equal to a quantity of second CSI-RS signals, all the second CSI-RS signals have a same beamforming factor, and a width of beamforming represented by the second beamforming parameter is less than the width of the beam in the second beam group.

Further, the first beamforming parameter includes an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter includes an identifier of a beam in the horizontal antenna direction, an identifier of a beam in the vertical antenna direction, and a phase difference in two antenna polarization directions.

Optionally, the CSI-RS send window parameter includes a first send window parameter and a second send window parameter, and the first send window parameter includes a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter includes a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

The terminal device provided in this embodiment of the present invention may execute the foregoing method embodiments, and an implementation principle and a technical effect thereof are similar. Details are not described herein.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention which is defined by the appended claims.

## Claims

1. An information transmission method performed by an access network device, the method comprising:
• sending a channel state information-reference signal, CSI-RS, configuration parameter to a terminal device, UE, wherein the CSI-RS configuration parameter comprises a quantity of CSI-RS signals to be sent by the access network device at each level and a sampling rate at each level (step 101); and
• receiving, after sending, based on the quantity of CSI-RS signals at each level, a CSI-RS signal corresponding to each level to the UE, a beamforming parameter at each level that is reported by the UE for the CSI-RS signal at each level, wherein the beamforming parameter at each level is determined by the UE based on the CSI-RS signal at each level and the sampling rate at each level, wherein a width of a beam represented by the beamforming parameter at each level is less than a width of beamforming used for delivering the CSI-RS signal at each level, and a width of beamforming used for delivering a CSI-RS signal at a current level is less than a width of a beam represented by a beamforming parameter reported at a previous level (step 103).

2. The method according to claim 1, wherein the quantity of CSI-RS signals to be sent at each level comprises a quantity of CSI-RS signals that have a same polarization direction in a horizontal direction and a quantity of CSI-RS signals that have a same polarization direction in a vertical direction, and the sampling rate at each level comprises a sampling rate in the horizontal direction and a sampling rate in the vertical direction.

3. The method according to claim 1 or 2, wherein the CSI-RS configuration parameter further comprises a CSI-RS send window parameter, the CSI-RS send window parameter is used to represent a sending manner of the CSI-RS signal at each level, and the sending manner comprises at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window;
wherein the CSI-RS configuration parameter comprises a quantity of CSI-RS signals to be sent by the access network device at a first level, a quantity of CSI-RSs to be sent at a second level, a sampling rate at the first level, and a sampling rate at the second level, and the receiving, by the access network device after sending, based on the quantity of CSI-RS signals at each level, a CSI-RS signal corresponding to each level to the UE, a beamforming parameter at each level that is reported by the UE for the CSI-RS signal at each level specifically comprises:
after sending a first CSI-RS signal to the UE based on the quantity of CSI-RS signals to be sent at the first level and a preset first beam group, receiving, by the access network device, a first beamforming parameter reported by the UE based on the quantity of CSI-RS signals to be sent at the first level, the sampling rate at the first level, and the first CSI-RS signal, wherein a width of a beam represented by the first beamforming parameter is less than a width of a beam in the first beam group, a quantity of beams in the first beam group is equal to a quantity of first CSI-RS signals, and all the first CSI-RS signals have a same beamforming factor;
determining, by the access network device, a second beam group based on the first beamforming parameter, and sending a second CSI-RS signal to the UE based on the quantity of CSI-RS signals to be sent at the second level and the second beam group,
wherein a width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor; and
receiving, by the access network device, a second beamforming parameter reported by the UE based on the quantity of CSI-RS signals to be sent at the second level, the sampling rate at the second level, and the second CSI-RS signal, wherein a width of beamforming represented by the second beamforming parameter is less than the width of the beam in the second beam group;
wherein the first beamforming parameter comprises an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter comprises an identifier of a beam in the horizontal antenna direction, an identifier of a beam in the vertical antenna direction, and a phase difference in two antenna polarization directions;
wherein the CSI-RS send window parameter comprises a first send window parameter and a second send window parameter, and the first send window parameter comprises a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter comprises a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

4. An access network device, comprising:
a sending module (10), configured to send a channel state information-reference signal CSI-RS configuration parameter to a terminal device UE, wherein the CSI-RS configuration parameter comprises a quantity of CSI-RS signals to be sent by the access network device at each level and a sampling rate at each level; and
a receiving module (11), configured to: after the sending module sends, based on the quantity of CSI-RS signals at each level, a CSI-RS signal corresponding to each level to the UE, receive a beamforming parameter at each level that is reported by the UE for the CSI-RS signal at each level, wherein the beamforming parameter at each level is determined by the UE based on the CSI-RS signal at each level and the sampling rate at each level, wherein a width of a beam represented by the beamforming parameter at each level is less than a width of beamforming used for delivering the CSI-RS signal at each level, and a width of beamforming used for delivering a CSI-RS signal at a current level is less than a width of a beam represented by a beamforming parameter reported at a previous level.

5. The access network device according to claim 4, wherein the quantity of CSI-RS signals to be sent at each level comprises a quantity of CSI-RS signals that have a same polarization direction in a horizontal direction and a quantity of CSI-RS signals that have a same polarization direction in a vertical direction, and the sampling rate at each level comprises a sampling rate in the horizontal direction and a sampling rate in the vertical direction.

6. The access network device according to claim 4 or 5, wherein the CSI-RS configuration parameter further comprises a CSI-RS send window parameter, the CSI-RS send window parameter is used to represent a sending manner of the CSI-RS signal at each level, and the sending manner comprises at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

7. The access network device according to claim 6, wherein the CSI-RS configuration parameter comprises a quantity of CSI-RS signals to be sent by the access network device at a first level, a quantity of CSI-RSs to be sent at a second level, a sampling rate at the first level, and a sampling rate at the second level, and the receiving module specifically comprises:
a first receiving unit, configured to: after the sending module sends a first CSI-RS signal to the UE based on the quantity of CSI-RS signals to be sent at the first level and a preset first beam group, receive a first beamforming parameter reported by the UE based on the quantity of CSI-RS signals to be sent at the first level, the sampling rate at the first level, and the first CSI-RS signal, wherein a width of a beam represented by the first beamforming parameter is less than a width of a beam in the first beam group, a quantity of beams in the first beam group is equal to a quantity of first CSI-RS signals, and all the first CSI-RS signals have a same beamforming factor;
a determining unit, configured to determine a second beam group based on the first beamforming parameter, wherein
the sending module is further configured to send a second CSI-RS signal to the UE based on the quantity of CSI-RS signals to be sent at the second level and the second beam group, wherein a width of a beam in the second beam group is less than or equal to the width of the beam represented by the first beamforming parameter, a quantity of beams in the second beam group is equal to a quantity of second CSI-RS signals, and all the second CSI-RS signals have a same beamforming factor; and
a second receiving unit, configured to receive a second beamforming parameter reported by the UE based on the quantity of CSI-RS signals to be sent at the second level, the sampling rate at the second level, and the second CSI-RS signal, wherein a width of beamforming represented by the second beamforming parameter is less than the width of the beam in the second beam group.

8. The access network device according to claim 7, wherein the first beamforming parameter comprises an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter comprises an identifier of a beam in the horizontal antenna direction, an identifier of a beam in the vertical antenna direction, and a phase difference in two antenna polarization directions.

9. The access network device according to claim 7, wherein the CSI-RS send window parameter comprises a first send window parameter and a second send window parameter, and the first send window parameter comprises a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter comprises a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

10. A terminal device, comprising a receiving module (20), a processing module (21), and a sending module (22), wherein
the receiving module (20) is configured to receive a channel state information-reference signal CSI-RS configuration parameter sent by an access network device, wherein the CSI-RS configuration parameter comprises a quantity of CSI-RS signals to be sent by the access network device at each level and a sampling rate at each level; and
the processing module (21) is configured to: after the receiving module (20) receives a CSI-RS signal at each level that is sent by the access network device, determine a beamforming parameter at each level based on the CSI-RS signal at each level and the sampling rate at each level, and report the beamforming parameter at each level to the access network device by using the sending module, wherein a width of a beam represented by the beamforming parameter at each level is less than a width of beamforming used for delivering the CSI-RS signal at each level, and a width of beamforming used for delivering a CSI-RS signal at a current level is less than a width of a beam represented by a beamforming parameter reported at a previous level.

11. The terminal device according to claim 10, wherein the quantity of CSI-RS signals to be sent at each level comprises a quantity of CSI-RS signals that have a same polarization direction in a horizontal direction and a quantity of CSI-RS signals that have a same polarization direction in a vertical direction, and the sampling rate at each level comprises a sampling rate in the horizontal direction and a sampling rate in the vertical direction.

12. The terminal device according to claim 10 or 11, wherein the CSI-RS configuration parameter further comprises a CSI-RS send window parameter, the CSI-RS send window parameter is used to represent a sending manner of the CSI-RS signal at each level, and the sending manner comprises at least one of the following manners: a manner in which the CSI-RS signal at each level is sent by using a time domain window, a manner in which the CSI-RS signal at each level is sent by using a frequency domain window, or a manner in which the CSI-RS signal at each level is sent by using both a time domain window and a frequency domain window.

13. The terminal device according to claim 12, wherein the CSI-RS configuration parameter comprises a quantity of CSI-RS signals to be sent by the access network device at a first level, a quantity of CSI-RSs to be sent at a second level, a sampling rate at the first level, and a sampling rate at the second level, and the processing module specifically comprises:
a first processing unit, configured to: after the receiving module receives a first CSI-RS signal sent by the access network device based on the quantity of CSI-RS signals to be sent at the first level and a first beam group, determine a first beamforming parameter based on the quantity of CSI-RS signals to be sent at the first level, the sampling rate at the first level, and the first CSI-RS signal, and report the first beamforming parameter to the access network device by using the sending module, wherein a width of a beam represented by the first beamforming parameter is less than a width of a beam in the first beam group, a quantity of beams in the first beam group is equal to a quantity of first CSI-RS signals, and all the first CSI-RS signals have a same beamforming factor; and
a second processing unit, configured to: after the receiving module receives a second CSI-RS signal sent by the access network device based on the quantity of CSI-RS signals to be sent at the second level and a second beam group, determine a second beamforming parameter based on the quantity of CSI-RS signals to be sent at the second level, the sampling rate at the second level, and the second CSI-RS signal, and report the second beamforming parameter to the access network device by using the sending module, wherein the second beam group is determined by the access network device based on the first beamforming parameter, a width of a beam in the second beam group is less than or equal to the width of the beam represented by the first beamforming parameter, a quantity of beams in the second beam group is equal to a quantity of second CSI-RS signals, all the second CSI-RS signals have a same beamforming factor, and a width of beamforming represented by the second beamforming parameter is less than the width of the beam in the second beam group.

14. The terminal device according to claim 13, wherein the first beamforming parameter comprises an identifier of a first main beam in a horizontal antenna direction, an identifier of a second main beam in a vertical antenna direction, an offset relative to the first main beam in the horizontal antenna direction, and an offset relative to the second main beam in the vertical antenna direction; and
the second beamforming parameter comprises an identifier of a beam in the horizontal antenna direction, an identifier of a beam in the vertical antenna direction, and a phase difference in two antenna polarization directions.

15. The terminal device according to claim 13, wherein the CSI-RS send window parameter comprises a first send window parameter and a second send window parameter, and the first send window parameter comprises a start sending symbol or subframe of a CSI-RS signal in time domain, a symbol or subframe offset of the CSI-RS signal in time domain, and a total quantity of symbols or subframes occupied by the CSI-RS signal in time domain, and is used to indicate, to the UE, that the access network device sends a CSI-RS signal at the first level by using the time domain window; and
the second send window parameter comprises a start sending subcarrier, resource block, or sub-band of a CSI-RS signal in frequency domain, a subcarrier, resource block, or sub-band offset of the CSI-RS signal in frequency domain, and a total quantity of subcarriers, resource blocks, or sub-bands occupied by the CSI-RS signal in frequency domain, and is used to indicate, to the UE, that the access network device sends a CSI-RS signal at the second level by using the frequency domain window.

## Patentansprüche

1. Datenübertragungsverfahren, das durch eine Zugangsnetzvorrichtung durchgeführt wird, wobei das Verfahren Folgendes umfasst:
• Senden eines Kanalzustandsdatenbezugssignal-Konfigurationsparameters, CSI-RS-Konfigurationsparameters, zu einem Endgerät, UE, wobei der CSI-RS-Konfigurationsparameter eine Menge von CSI-RS-Signalen, die durch die Zugangsnetzvorrichtung bei jedem Pegel und einer Abtastrate bei jedem Pegel gesendet werden sollen, umfasst (Schritt 101); und
• Empfangen nach dem Senden auf der Grundlage der Menge von CSI-RS-Signalen bei jedem Pegel eines CSI-RS-Signals, das jedem Pegel entspricht, zum UE eines Strahlformungsparameters bei jedem Pegel, der durch das UE für das CSI-RS-Signal bei jedem Pegel berichtet wird, wobei der Strahlformungsparameter bei jedem Pegel durch das UE auf der Grundlage des CSI-RS-Signals bei jedem Pegel und der Abtastrate bei jedem Pegel bestimmt wird, wobei eine Breite eines Strahls, der durch den Strahlformungsparameter bei jedem Pegel repräsentiert wird, kleiner als eine Breite der Strahlformung ist, die zum Übermitteln des CSI-RS-Signals bei jedem Pegel verwendet wird, und eine Breite der Strahlformung, die zum Übermitteln eines CSI-RS-Signals bei einem aktuellen Pegel verwendet wird, kleiner als eine Breite eines Strahls ist, der durch einen Strahlformungsparameter, der bei einem vorhergehenden Pegel berichtet wurde, repräsentiert wird (Schritt 103).

2. Verfahren nach Anspruch 1, wobei die Menge von CSI-RS-Signalen, die bei jedem Pegel gesendet werden sollen, eine Menge von CSI-RS-Signalen, die dieselbe Polarisationsrichtung in einer Horizontalrichtung besitzen, und eine Menge von CSI-RS-Signalen, die dieselbe Polarisationsrichtung in einer Vertikalrichtung besitzen, umfasst und die Abtastrate bei jedem Pegel eine Abtastrate in der Horizontalrichtung und eine Abtastrate in der Vertikalrichtung umfasst.

3. Verfahren nach Anspruch 1 oder 2, wobei der CSI-RS-Konfigurationsparameter ferner einen CSI-RS-Sendefensterparameter umfasst, der CSI-RS-Sendefensterparameter verwendet wird, um eine Sendeweise des CSI-RS-Signals bei jedem Pegel zu repräsentieren, und die Sendeweise mindestens eine der folgenden Weisen umfasst: eine Weise, in der das CSI-RS-Signal bei jedem Pegel unter Verwendung eines Zeitdomänenfensters gesendet wird, eine Weise, in der das CSI-RS-Signal bei jedem Pegel unter Verwendung eines Frequenzdomänenfensters gesendet wird, oder eine Weise, in der das CSI-RS-Signal bei jedem Pegel unter Verwendung sowohl eines Zeitdomänenfensters als auch eines Frequenzdomänenfensters gesendet wird; wobei
der CSI-RS-Konfigurationsparameter eine Menge von CSI-RS-Signalen, die durch die Zugangsnetzvorrichtung bei einem ersten Pegel gesendet werden sollen, eine Menge von CSI-RSs, die bei einem zweiten Pegel gesendet werden sollen, eine Abtastrate beim ersten Pegel und eine Abtastrate beim zweiten Pegel umfasst und das Empfangen durch die Zugangsnetzvorrichtung nach dem Senden auf der Grundlage der Menge von CSI-RS-Signalen bei jedem Pegel eines CSI-RS-Signals, das jedem Pegel entspricht, zum UE eines Strahlformungsparameters bei jedem Pegel, der durch das UE für das CSI-RS-Signal bei jedem Pegel berichtet wird, speziell Folgendes umfasst:
Empfangen nach dem Senden eines ersten CSI-RS-Signals zum UE auf der Grundlage der Menge von CSI-RS-Signalen, die beim ersten Pegel gesendet werden sollen, und einer voreingestellten ersten Strahlgruppe durch die Zugangsnetzvorrichtung eines ersten Strahlformungsparameters, der durch das UE auf der Grundlage der Menge von CSI-RS-Signalen, die beim ersten Pegel gesendet werden sollen, der Abtastrate beim ersten Pegel und des ersten CSI-RS-Signals berichtet wird, wobei eine Breite eines Strahls, der durch den ersten Strahlformungsparameter repräsentiert wird, kleiner als eine Breite eines Strahls in der ersten Strahlgruppe ist, eine Menge von Strahlen in der ersten Strahlgruppe gleich einer Menge von ersten CSI-RS-Signalen ist und alle ersten CSI-RS-Signale denselben Strahlformungsfaktor besitzen;
Bestimmen durch die Zugangsnetzvorrichtung einer zweiten Strahlgruppe auf der Grundlage des ersten Strahlformungsparameters und Senden eines zweiten CSI-RS-Signals zum UE auf der Grundlage der Menge von CSI-RS-Signalen, die beim zweiten Pegel gesendet werden sollen, und der zweiten Strahlgruppe, wobei eine Breite eines Strahls in der zweiten Strahlgruppe kleiner oder gleich der Breite des Strahls ist, der durch den ersten Strahlformungsparameter repräsentiert wird, eine Menge von Strahlen in der zweiten Strahlgruppe gleich einer Menge zweiter CSI-RS-Signale ist und alle zweiten CSI-RS-Signale denselben Strahlformungsfaktor besitzen; und
Empfangen durch die Zugangsnetzvorrichtung eines zweiten Strahlformungsparameters, der durch das UE auf der Grundlage der Menge von CSI-RS-Signalen, die beim zweiten Pegel gesendet werden sollen, der Abtastrate beim zweiten Pegel und des zweiten CSI-RS-Signals berichtet wird, wobei eine Breite der Strahlformung, die durch den zweiten Strahlformungsparameter repräsentiert wird, kleiner als die Breite des Strahls in der zweiten Strahlgruppe ist; wobei der erste Strahlformungsparameter eine Kennung eines ersten Hauptstrahls in einer horizontalen Antennenrichtung, eine Kennung eines zweiten Hauptstrahls in einer vertikalen Antennenrichtung, einen Versatz in Bezug auf den ersten Hauptstrahl in der horizontalen Antennenrichtung und einen Versatz in Bezug auf den zweiten Hauptstrahl in der vertikalen Antennenrichtung umfasst und
der zweite Strahlformungsparameter eine Kennung eines Strahls in der horizontalen Antennenrichtung, eine Kennung eines Strahls in der vertikalen Antennenrichtung und eine Phasendifferenz in zwei Antennenpolarisationsrichtungen umfasst; wobei der CSI-RS-Sendefensterparameter einen ersten Sendefensterparameter und einen zweiten Sendefensterparameter umfasst und der erste Sendefensterparameter ein Sendestartsymbol oder einen Sendestartunterrahmen eines CSI-RS-Signals in der Zeitdomäne, ein Symbol oder einen Unterrahmen, der vom CSI-RS-Signal in der Zeitdomäne versetzt ist, und eine Gesamtmenge von Symbolen oder Unterrahmen, die durch das CSI-RS-Signal in der Zeitdomäne belegt sind, umfasst und verwendet wird, zum UE anzuzeigen, dass die Zugangsnetzvorrichtung ein CSI-RS-Signal beim ersten Pegel unter Verwendung des Zeitdomänenfensters sendet; und
der zweite Sendefensterparameter einen Sendestartunterträger, einen Sendestartbetriebsmittelblock oder ein Sendestartunterband eines CSI-RS-Signals in der Frequenzdomäne, einen Unterträger, einen Betriebsmittelblock oder einen Unterbandversatz des CSI-RS-Signals in der Frequenzdomäne und eine Gesamtmenge von Unterträgern, Betriebsmittelblöcken oder Unterbändern, die durch das CSI-RS-Signal in der Frequenzdomäne belegt sind, umfasst und verwendet wird, zum UE anzuzeigen, dass die Zugangsnetzvorrichtung ein CSI-RS-Signal beim zweiten Pegel unter Verwendung des Frequenzdomänenfensters sendet.

4. Zugangsnetzvorrichtung, die Folgendes umfasst:
ein Sendemodul (10), das konfiguriert ist zum Senden eines Kanalzustandsdatenbezugssignal-Konfigurationsparameters, CSI-RS-Konfigurationsparameters, zu einem Endgerät, UE, wobei der CSI-RS-Konfigurationsparameter eine Menge von CSI-RS-Signalen, die durch die Zugangsnetzvorrichtung bei jedem Pegel und einer Abtastrate bei jedem Pegel gesendet werden sollen, umfasst; und
ein Empfangsmodul (11), das konfiguriert ist zum Empfangen, nachdem das Sendemodul auf der Grundlage der Menge von CSI-RS-Signalen bei jedem Pegel ein CSI-RS-Signal, das jedem Pegel entspricht, zum UE gesendet hat, eines Strahlformungsparameters bei jedem Pegel, der durch das UE für das CSI-RS-Signal bei jedem Pegel berichtet wird, wobei der Strahlformungsparameter bei jedem Pegel durch das UE auf der Grundlage des CSI-RS-Signals bei jedem Pegel und der Abtastrate bei jedem Pegel bestimmt wird, wobei eine Breite eines Strahls, der durch den Strahlformungsparameter bei jedem Pegel repräsentiert wird, kleiner als eine Breite der Strahlformung ist, die zum Übermitteln des CSI-RS-Signals bei jedem Pegel verwendet wird, und eine Breite der Strahlformung, die zum Übermitteln eines CSI-RS-Signals bei einem aktuellen Pegel verwendet wird, kleiner als eine Breite eines Strahls ist, der durch einen Strahlformungsparameter, der bei einem vorhergehenden Pegel berichtet wird, repräsentiert wird.

5. Zugangsnetzvorrichtung nach Anspruch 4, wobei die Menge von CSI-RS-Signalen, die bei jedem Pegel gesendet werden sollen, eine Menge von CSI-RS-Signalen, die dieselbe Polarisationsrichtung in einer Horizontalrichtung besitzen, und eine Menge von CSI-RS-Signalen, die dieselbe Polarisationsrichtung in einer Vertikalrichtung besitzen, umfasst und die Abtastrate bei jedem Pegel eine Abtastrate in der Horizontalrichtung und eine Abtastrate in der Vertikalrichtung umfasst.

6. Zugangsnetzvorrichtung nach Anspruch 4 oder 5, wobei der CSI-RS-Konfigurationsparameter ferner einen CSI-RS-Sendefensterparameter umfasst, der CSI-RS-Sendefensterparameter verwendet wird, um eine Sendeweise des CSI-RS-Signals bei jedem Pegel zu repräsentieren, und die Sendeweise mindestens eine der folgenden Weisen umfasst: eine Weise, in der das CSI-RS-Signal bei jedem Pegel unter Verwendung eines Zeitdomänenfensters gesendet wird, eine Weise, in der das CSI-RS-Signal bei jedem Pegel unter Verwendung eines Frequenzdomänenfensters gesendet wird, oder eine Weise, in der das CSI-RS-Signal bei jedem Pegel unter Verwendung sowohl eines Zeitdomänenfensters als auch eines Frequenzdomänenfensters gesendet wird.

7. Zugangsnetzvorrichtung nach Anspruch 6, wobei der CSI-RS-Konfigurationsparameter eine Menge von CSI-RS-Signalen, die durch die Zugangsnetzvorrichtung bei einem ersten Pegel gesendet werden sollen, eine Menge von CSI-RSs, die bei einem zweiten Pegel gesendet werden sollen, eine Abtastrate beim ersten Pegel und eine Abtastrate beim zweiten Pegel umfasst und das Empfangsmodul speziell Folgendes umfasst:
eine erste Empfangseinheit, die konfiguriert ist zum Empfangen, nachdem das Sendemodul ein erstes CSI-RS-Signal zum UE auf der Grundlage der Menge von CSI-RS-Signalen, die beim ersten Pegel gesendet werden sollen, und einer voreingestellten ersten Strahlgruppe gesendet hat, eines ersten Strahlformungsparameters, der durch das UE auf der Grundlage der Menge von CSI-RS-Signalen, die beim ersten Pegel gesendet werden sollen, der Abtastrate beim ersten Pegel und des ersten CSI-RS-Signals berichtet wird, wobei eine Breite eines Strahls, der durch den ersten Strahlformungsparameter repräsentiert wird, kleiner als eine Breite eines Strahls in der ersten Strahlgruppe ist, eine Menge von Strahlen in der ersten Strahlgruppe gleich einer Menge von ersten CSI-RS-Signalen ist und alle ersten CSI-RS-Signale denselben Strahlformungsfaktor besitzen;
eine Bestimmungseinheit, die konfiguriert ist zum Bestimmen einer zweiten Strahlgruppe auf der Grundlage des ersten Strahlformungsparameters, wobei das Sendemodul ferner konfiguriert ist zum Senden eines zweiten CSI-RS-Signals zum UE auf der Grundlage der Menge von CSI-RS-Signalen, die beim zweiten Pegel gesendet werden sollen, und der zweiten Strahlgruppe, wobei eine Breite eines Strahls in der zweiten Strahlgruppe kleiner oder gleich der Breite des Strahls ist, der durch den ersten Strahlformungsparameter repräsentiert wird, eine Menge von Strahlen in der zweiten Strahlgruppe gleich einer Menge zweiter CSI-RS-Signale ist und alle zweiten CSI-RS-Signale denselben Strahlformungsfaktor besitzen; und
eine zweite Empfangseinheit, die konfiguriert ist zum Empfangen eines zweiten Strahlformungsparameters, der durch das UE auf der Grundlage der Menge von CSI-RS-Signalen, die beim zweiten Pegel gesendet werden sollen, der Abtastrate beim zweiten Pegel und des zweiten CSI-RS-Signals berichtet wird, wobei eine Breite der Strahlformung, die durch den zweiten Strahlformungsparameter repräsentiert wird, kleiner als die Breite des Strahls in der zweiten Strahlgruppe ist.

8. Zugangsnetzvorrichtung nach Anspruch 7, wobei der erste Strahlformungsparameter eine Kennung eines ersten Hauptstrahls in einer horizontalen Antennenrichtung, eine Kennung eines zweiten Hauptstrahls in einer vertikalen Antennenrichtung, einen Versatz in Bezug auf den ersten Hauptstrahl in der horizontalen Antennenrichtung und einen Versatz in Bezug auf den zweiten Hauptstrahl in der vertikalen Antennenrichtung umfasst und
der zweite Strahlformungsparameter eine Kennung eines Strahls in der horizontalen Antennenrichtung, eine Kennung eines Strahls in der vertikalen Antennenrichtung und eine Phasendifferenz in zwei Antennenpolarisationsrichtungen umfasst.

9. Zugangsnetzvorrichtung nach Anspruch 7, wobei der CSI-RS-Sendefensterparameter einen ersten Sendefensterparameter und einen zweiten Sendefensterparameter umfasst und der erste Sendefensterparameter ein Sendestartsymbol oder einen Sendestartunterrahmen eines CSI-RS-Signals in der Zeitdomäne, ein Symbol oder einen Unterrahmen, der vom CSI-RS-Signal in der Zeitdomäne versetzt ist, und eine Gesamtmenge von Symbolen oder Unterrahmen, die durch das CSI-RS-Signal in der Zeitdomäne belegt sind, umfasst und verwendet wird, zum UE anzuzeigen, dass die Zugangsnetzvorrichtung ein CSI-RS-Signal beim ersten Pegel unter Verwendung des Zeitdomänenfensters sendet; und
der zweite Sendefensterparameter einen Sendestartunterträger, einen Sendestartbetriebsmittelblock oder ein Sendestartunterband eines CSI-RS-Signals in der Frequenzdomäne, einen Unterträger, einen Betriebsmittelblock oder einen Unterbandversatz des CSI-RS-Signals in der Frequenzdomäne und eine Gesamtmenge von Unterträgern, Betriebsmittelblöcken oder Unterbändern, die durch das CSI-RS-Signal in der Frequenzdomäne belegt sind, umfasst und verwendet wird, zum UE anzuzeigen, dass die Zugangsnetzvorrichtung ein CSI-RS-Signal beim zweiten Pegel unter Verwendung des Frequenzdomänenfensters sendet.

10. Endgerät, das ein Empfangsmodul (20), ein Verarbeitungsmodul (21) und ein Sendemodul (22) umfasst, wobei
das Empfangsmodul (20) konfiguriert ist zum Empfangen eines Kanalzustandsdatenbezugssignal-Konfigurationsparameters, CSI-RS-Konfigurationsparameters, der durch eine Zugangsnetzvorrichtung gesendet wurde, wobei der CSI-RS-Konfigurationsparameter eine Menge von CSI-RS-Signalen, die durch die Zugangsnetzvorrichtung bei jedem Pegel und einer Abtastrate bei jedem Pegel gesendet werden sollen, umfasst; und
das Verarbeitungsmodul (21) konfiguriert ist zum Bestimmen, nachdem das Empfangsmodul (20) ein CSI-RS-Signal bei jedem Pegel, das durch die Zugangsnetzvorrichtung gesendet wurde, empfangen hat, eines Strahlformungsparameters bei jedem Pegel auf der Grundlage des CSI-RS-Signals bei jedem Pegel und der Abtastrate bei jedem Pegel und Berichten des Strahlformungsparameters bei jedem Pegel zur Zugangsnetzvorrichtung unter Verwendung des Sendemoduls, wobei eine Breite eines Strahls, der durch den Strahlformungsparameter bei jedem Pegel repräsentiert wird, kleiner als eine Breite der Strahlformung ist, die zum Übermitteln des CSI-RS-Signals bei jedem Pegel verwendet wird, und eine Breite der Strahlformung, die zum Übermitteln eines CSI-RS-Signals bei einem aktuellen Pegel verwendet wird, kleiner als eine Breite eines Strahls ist, der durch einen Strahlformungsparameter, der bei einem vorhergehenden Pegel berichtet wurde, repräsentiert wird.

11. Endgerät nach Anspruch 10, wobei die Menge von CSI-RS-Signalen, die bei jedem Pegel gesendet werden sollen, eine Menge von CSI-RS-Signalen, die dieselbe Polarisationsrichtung in einer Horizontalrichtung besitzen, und eine Menge von CSI-RS-Signalen, die dieselbe Polarisationsrichtung in einer Vertikalrichtung besitzen, umfasst und die Abtastrate bei jedem Pegel eine Abtastrate in der Horizontalrichtung und eine Abtastrate in der Vertikalrichtung umfasst.

12. Endgerät nach Anspruch 10 oder 11, wobei der CSI-RS-Konfigurationsparameter ferner einen CSI-RS-Sendefensterparameter umfasst, der CSI-RS-Sendefensterparameter verwendet wird, um eine Sendeweise des CSI-RS-Signals bei jedem Pegel zu repräsentieren, und die Sendeweise mindestens eine der folgenden Weisen umfasst: eine Weise, in der das CSI-RS-Signal bei jedem Pegel unter Verwendung eines Zeitdomänenfensters gesendet wird, eine Weise, in der das CSI-RS-Signal bei jedem Pegel unter Verwendung eines Frequenzdomänenfensters gesendet wird, oder eine Weise, in der das CSI-RS-Signal bei jedem Pegel unter Verwendung sowohl eines Zeitdomänenfensters als auch eines Frequenzdomänenfensters gesendet wird.

13. Endgerät nach Anspruch 12, wobei der CSI-RS-Konfigurationsparameter eine Menge von CSI-RS-Signalen, die durch die Zugangsnetzvorrichtung bei einem ersten Pegel gesendet werden sollen, eine Menge von CSI-RSs, die bei einem zweiten Pegel gesendet werden sollen, eine Abtastrate beim ersten Pegel und eine Abtastrate beim zweiten Pegel umfasst und das Verarbeitungsmodul speziell Folgendes umfasst:
eine erste Verarbeitungseinheit, die konfiguriert ist zum Bestimmen, nachdem das Empfangsmodul ein erstes CSI-RS-Signal, das durch die Zugangsnetzvorrichtung auf der Grundlage der Menge von CSI-RS-Signalen, die beim ersten Pegel gesendet werden sollen, und einer ersten Strahlgruppe gesendet wurde, empfangen hat, eines ersten Strahlformungsparameters auf der Grundlage der Menge von CSI-RS-Signalen, die beim ersten Pegel gesendet werden sollen, der Abtastrate beim ersten Pegel und des ersten CSI-RS-Signals und Berichten des ersten Strahlformungsparameters zur Zugangsnetzvorrichtung unter Verwendung des Sendemoduls, wobei eine Breite eines Strahls, der durch den ersten Strahlformungsparameter repräsentiert wird, kleiner als eine Breite eines Strahls in der ersten Strahlgruppe ist, eine Menge von Strahlen in der ersten Strahlgruppe gleich einer Menge erster CSI-RS-Signale ist und alle ersten CSI-RS-Signale denselben Strahlformungsfaktor besitzen; und
eine zweite Verarbeitungseinheit, die konfiguriert ist zum Bestimmen, nachdem das Empfangsmodul ein zweites CSI-RS-Signal, das durch die Zugangsnetzvorrichtung auf der Grundlage der Menge von CSI-RS-Signalen, die beim zweiten Pegel gesendet werden sollen, und einer zweiten Strahlgruppe gesendet wurde, empfangen hat, eines zweiten Strahlformungsparameters auf der Grundlage der Menge von CSI-RS-Signalen, die beim zweiten Pegel gesendet werden sollen, der Abtastrate beim zweiten Pegel und des zweiten CSI-RS-Signals und Berichten des zweiten Strahlformungsparameters zur Zugangsnetzvorrichtung unter Verwendung des Sendemoduls, wobei die zweite Strahlgruppe durch die Zugangsnetzvorrichtung auf der Grundlage des ersten Strahlformungsparameters bestimmt wird, eine Breite eines Strahls in der zweiten Strahlgruppe kleiner oder gleich der Breite des Strahls ist, der durch den ersten Strahlformungsparameter repräsentiert wird, eine Menge von Strahlen in der zweiten Strahlgruppe gleich einer Menge zweiter CSI-RS-Signale ist, alle zweiten CSI-RS-Signale denselben Strahlformungsfaktor besitzen und eine Breite der Strahlformung, die durch den zweiten Strahlformungsparameter repräsentiert wird, kleiner als die Breite des Strahls in der zweiten Strahlgruppe ist.

14. Endgerät nach Anspruch 13, wobei der erste Strahlformungsparameter eine Kennung eines ersten Hauptstrahls in einer horizontalen Antennenrichtung, eine Kennung eines zweiten Hauptstrahls in einer vertikalen Antennenrichtung, einen Versatz in Bezug auf den ersten Hauptstrahl in der horizontalen Antennenrichtung und einen Versatz in Bezug auf den zweiten Hauptstrahl in der vertikalen Antennenrichtung umfasst und
der zweite Strahlformungsparameter eine Kennung eines Strahls in der horizontalen Antennenrichtung, eine Kennung eines Strahls in der vertikalen Antennenrichtung und eine Phasendifferenz in zwei Antennenpolarisationsrichtungen umfasst.

15. Endgerät nach Anspruch 13, wobei der CSI-RS-Sendefensterparameter einen ersten Sendefensterparameter und einen zweiten Sendefensterparameter umfasst und der erste Sendefensterparameter ein Sendestartsymbol oder einen Sendestartunterrahmen eines CSI-RS-Signals in der Zeitdomäne, ein Symbol oder einen Unterrahmen, der vom CSI-RS-Signal in der Zeitdomäne versetzt ist, und eine Gesamtmenge von Symbolen oder Unterrahmen, die durch das CSI-RS-Signal in der Zeitdomäne belegt sind, umfasst und verwendet wird, zum UE anzuzeigen, dass die Zugangsnetzvorrichtung ein CSI-RS-Signal beim ersten Pegel unter Verwendung des Zeitdomänenfenster sendet; und
der zweite Sendefensterparameter einen Sendestartunterträger, einen Sendestartbetriebsmittelblock oder ein Sendestartunterband eines CSI-RS-Signals in der Frequenzdomäne, einen Unterträger, einen Betriebsmittelblock oder einen Unterbandversatz des CSI-RS-Signals in der Frequenzdomäne und eine Gesamtmenge von Unterträgern, Betriebsmittelblöcken oder Unterbändern, die durch das CSI-RS-Signal in der Frequenzdomäne belegt sind, umfasst und verwendet wird, zum UE anzuzeigen, dass die Zugangsnetzvorrichtung ein CSI-RS-Signal beim zweiten Pegel unter Verwendung des Frequenzdomänenfensters sendet.

## Revendications

1. Procédé de transmission d'informations réalisé par un dispositif de réseau d'accès, le procédé comprenant :
• l'envoi, à un dispositif terminal, noté UE, d'un paramètre de configuration de signal de référence d'informations d'état de canal, noté CSI-RS, le paramètre de configuration de CSI-RS comprenant une quantité de signaux CSI-RS à envoyer par le dispositif de réseau d'accès à chaque niveau et un taux d'échantillonnage à chaque niveau (étape 101) ; et
• la réception, après l'envoi, à l'UE, sur la base de la quantité de signaux CSI-RS à chaque niveau, d'un signal CSI-RS correspondant à chaque niveau, d'un paramètre de formation de faisceau à chaque niveau qui est notifié par l'UE pour le signal CSI-RS à chaque niveau, le paramètre de formation de faisceau à chaque niveau étant déterminé par l'UE sur la base du signal CSI-RS à chaque niveau et du taux d'échantillonnage à chaque niveau, une largeur d'un faisceau représenté par le paramètre de formation de faisceau à chaque niveau étant inférieure à une largeur de formation de faisceau utilisée pour fournir le signal CSI-RS à chaque niveau et une largeur de formation de faisceau utilisée pour fournir un signal CSI-RS à un niveau actuel étant inférieure à une largeur d'un faisceau représenté par un paramètre de formation de faisceau notifié à un niveau précédent (étape 103).

2. Procédé selon la revendication 1, dans lequel la quantité de signaux CSI-RS à envoyer à chaque niveau comprend une quantité de signaux CSI-RS présentant une même direction de polarisation dans une direction horizontale et une quantité de signaux CSI-RS présentant une même direction de polarisation dans une direction verticale, et le taux d'échantillonnage à chaque niveau comprend un taux d'échantillonnage dans la direction horizontale et un taux d'échantillonnage dans la direction verticale.

3. Procédé selon la revendication 1 ou 2, dans lequel le paramètre de configuration de CSI-RS comprend en outre un paramètre de fenêtre d'envoi de CSI-RS, le paramètre de fenêtre d'envoi de CSI-RS sert à représenter un mode d'envoi du signal CSI-RS à chaque niveau et le mode d'envoi comprend au moins un des modes suivants : un mode dans lequel le signal CSI-RS à chaque niveau est envoyé en utilisant une fenêtre dans le domaine temporel, un mode dans lequel le signal CSI-RS à chaque niveau est envoyé en utilisant une fenêtre dans le domaine fréquentiel ou un mode dans lequel le signal CSI-RS à chaque niveau est envoyé en utilisant à la fois une fenêtre dans le domaine temporel et une fenêtre dans le domaine fréquentiel ;
le paramètre de configuration de CSI-RS comprenant une quantité de signaux CSI-RS à envoyer par le dispositif de réseau d'accès à un premier niveau, une quantité de CSI-RS à envoyer à un deuxième niveau, un taux d'échantillonnage au premier niveau et un taux d'échantillonnage au deuxième niveau, et la réception, par le dispositif de réseau d'accès, après l'envoi, à l'UE, sur la base de la quantité de signaux CSI-RS à chaque niveau, d'un signal CSI-RS correspondant à chaque niveau, d'un paramètre de formation de faisceau à chaque niveau qui est notifié par l'UE pour chaque signal CSI-RS à chaque niveau comprenant plus particulièrement :
après l'envoi, à l'UE, d'un premier signal CSI-RS sur la base de la quantité de signaux CSI-RS à envoyer au premier niveau et d'un premier groupe de faisceaux prédéfini, la réception, par le dispositif de réseau d'accès, d'un premier paramètre de formation de faisceau notifié par l'UE sur la base de la quantité de signaux CSI-RS à envoyer au premier niveau, du taux d'échantillonnage au premier niveau et du premier signal CSI-RS, une largeur d'un faisceau représenté par le premier paramètre de formation de faisceau étant inférieure à une largeur d'un faisceau dans le premier groupe de faisceaux, une quantité de faisceaux dans le premier groupe de faisceaux étant égale à une quantité de premiers signaux CSI-RS et tous les premiers signaux CSI-RS possédant un même facteur de formation de faisceau ;
la détermination, par le dispositif de réseau d'accès, d'un deuxième groupe de faisceaux sur la base du premier paramètre de formation de faisceau, et l'envoi, à l'UE, d'un deuxième signal CSI-RS sur la base de la quantité de signaux CSI-RS à envoyer au deuxième niveau et du deuxième groupe de faisceaux, une largeur d'un faisceau dans le deuxième groupe de faisceaux étant inférieure ou égale à la largeur du faisceau représenté par le premier paramètre de formation de faisceau, une quantité de faisceaux dans le deuxième groupe de faisceaux étant égale à une quantité de deuxièmes signaux CSI-RS et tous les deuxièmes signaux CSI-RS possédant un même facteur de formation de faisceau ; et
la réception, par le dispositif de réseau d'accès, d'un deuxième paramètre de formation de faisceau notifié par l'UE sur la base de la quantité de signaux CSI-RS à envoyer au deuxième niveau, du taux d'échantillonnage au deuxième niveau et du deuxième signal CSI-RS, une largeur de formation de faisceau représentée par le deuxième paramètre de formation de faisceau étant inférieure à la largeur du faisceau dans le deuxième groupe de faisceaux ;
le premier paramètre de formation de faisceau comprenant un identifiant d'un premier faisceau principal dans une direction d'antenne horizontale, un identifiant d'un deuxième faisceau principal dans une direction d'antenne verticale, un décalage par rapport au premier faisceau principal dans la direction d'antenne horizontale et un décalage par rapport au deuxième faisceau principal dans la direction d'antenne verticale ; et
le deuxième paramètre de formation de faisceau comprenant un identifiant d'un faisceau dans la direction d'antenne horizontale, un identifiant d'un faisceau dans la direction d'antenne verticale et une différence de phase dans deux directions de polarisation d'antenne ;
le paramètre de fenêtre d'envoi de CSI-RS comprenant un premier paramètre de fenêtre d'envoi et un deuxième paramètre de fenêtre d'envoi, et le premier paramètre de fenêtre d'envoi comprenant un symbole ou une sous-trame de début d'envoi d'un signal CSI-RS dans le domaine temporel, un décalage de symboles ou de sous-trames du signal CSI-RS dans le domaine temporel et une quantité totale de symboles ou de sous-trames occupée par le signal CSI-RS dans le domaine temporel, et servant à indiquer, à l'UE, que le dispositif de réseau d'accès envoie un signal CSI-RS au premier niveau en utilisant la fenêtre dans le domaine temporel ; et
le deuxième paramètre de fenêtre d'envoi comprenant une sous-porteuse, un bloc de ressources ou une sous-bande de début d'envoi d'un signal CSI-RS dans le domaine fréquentiel, un décalage de sous-porteuses, de blocs de ressources ou de sous-bandes du signal CSI-RS dans le domaine fréquentiel, et une quantité totale de sous-porteuses, de blocs de ressources ou de sous-bandes occupée par le signal CSI-RS dans le domaine fréquentiel, et servant à indiquer, à l'UE, que le dispositif de réseau d'accès envoie un signal CSI-RS au deuxième niveau en utilisant la fenêtre dans le domaine fréquentiel.

4. Dispositif de réseau d'accès, comprenant :
un module d'envoi (10), configuré pour envoyer, à un dispositif terminal, noté UE, un paramètre de configuration de signal de référence d'informations d'état de canal, noté CSI-RS, le paramètre de configuration de CSI-RS comprenant une quantité de signaux CSI-RS à envoyer par le dispositif de réseau d'accès à chaque niveau et un taux d'échantillonnage à chaque niveau ; et
un module de réception (11), configuré pour : après que le module d'envoi a envoyé, à l'UE, sur la base de la quantité de signaux CSI-RS à chaque niveau, un signal CSI-RS correspondant à chaque niveau, recevoir un paramètre de formation de faisceau à chaque niveau qui est notifié par l'UE pour le signal CSI-RS à chaque niveau, le paramètre de formation de faisceau à chaque niveau étant déterminé par l'UE sur la base du signal CSI-RS à chaque niveau et du taux d'échantillonnage à chaque niveau, une largeur d'un faisceau représenté par le paramètre de formation de faisceau à chaque niveau étant inférieure à une largeur de formation de faisceau utilisée pour fournir le signal CSI-RS à chaque niveau et une largeur de formation de faisceau utilisée pour fournir un signal CSI-RS à un niveau actuel étant inférieure à une largeur d'un faisceau représenté par un paramètre de formation de faisceau notifié à un niveau précédent.

5. Dispositif de réseau d'accès selon la revendication 4, dans lequel la quantité de signaux CSI-RS à envoyer à chaque niveau comprend une quantité de signaux CSI-RS présentant une même direction de polarisation dans une direction horizontale et une quantité de signaux CSI-RS présentant une même direction de polarisation dans une direction verticale, et le taux d'échantillonnage à chaque niveau comprend un taux d'échantillonnage dans la direction horizontale et un taux d'échantillonnage dans la direction verticale.

6. Dispositif de réseau d'accès selon la revendication 4 ou 5, dans lequel le paramètre de configuration de CSI-RS comprend en outre un paramètre de fenêtre d'envoi de CSI-RS, le paramètre de fenêtre d'envoi de CSI-RS sert à représenter un mode d'envoi du signal CSI-RS à chaque niveau et le mode d'envoi comprend au moins un des modes suivants : un mode dans lequel le signal CSI-RS à chaque niveau est envoyé en utilisant une fenêtre dans le domaine temporel, un mode dans lequel le signal CSI-RS à chaque niveau est envoyé en utilisant une fenêtre dans le domaine fréquentiel ou un mode dans lequel le signal CSI-RS à chaque niveau est envoyé en utilisant à la fois une fenêtre dans le domaine temporel et une fenêtre dans le domaine fréquentiel.

7. Dispositif de réseau d'accès selon la revendication 6, dans lequel le paramètre de configuration de CSI-RS comprend une quantité de signaux CSI-RS à envoyer par le dispositif de réseau d'accès à un premier niveau, une quantité de CSI-RS à envoyer à un deuxième niveau, un taux d'échantillonnage au premier niveau et un taux d'échantillonnage au deuxième niveau, et le module de réception comprend plus particulièrement :
une première unité de réception, configurée pour : après que le module d'envoi a envoyé, à l'UE, un premier signal CSI-RS sur la base de la quantité de signaux CSI-RS à envoyer au premier niveau et d'un premier groupe de faisceaux prédéfini, recevoir un premier paramètre de formation de faisceau notifié par l'UE sur la base de la quantité de signaux CSI-RS à envoyer au premier niveau, du taux d'échantillonnage au premier niveau et du premier signal CSI-RS, une largeur d'un faisceau représenté par le premier paramètre de formation de faisceau étant inférieure à une largeur d'un faisceau dans le premier groupe de faisceaux, une quantité de faisceaux dans le premier groupe de faisceaux étant égale à une quantité de premiers signaux CSI-RS et tous les premiers signaux CSI-RS possédant un même facteur de formation de faisceau ;
une unité de détermination, configurée pour déterminer un deuxième groupe de faisceaux sur la base du premier paramètre de formation de faisceau,
le module d'envoi étant configuré en outre pour envoyer, à l'UE, un deuxième signal CSI-RS sur la base de la quantité de signaux CSI-RS à envoyer au deuxième niveau et du deuxième groupe de faisceaux, une largeur d'un faisceau dans le deuxième groupe de faisceaux étant inférieure ou égale à la largeur du faisceau représenté par le premier paramètre de formation de faisceau, une quantité de faisceaux dans le deuxième groupe de faisceaux étant égale à une quantité de deuxièmes signaux CSI-RS et tous les deuxièmes signaux CSI-RS possédant un même facteur de formation de faisceau ; et
une deuxième unité de réception, configurée pour recevoir un deuxième paramètre de formation de faisceau notifié par l'UE sur la base de la quantité de signaux CSI-RS à envoyer au deuxième niveau, du taux d'échantillonnage au deuxième niveau et du deuxième signal CSI-RS, une largeur de formation de faisceau représentée par le deuxième paramètre de formation de faisceau étant inférieure à la largeur du faisceau dans le deuxième groupe de faisceaux.

8. Dispositif de réseau d'accès selon la revendication 7, dans lequel le premier paramètre de formation de faisceau comprend un identifiant d'un premier faisceau principal dans une direction d'antenne horizontale, un identifiant d'un deuxième faisceau principal dans une direction d'antenne verticale, un décalage par rapport au premier faisceau principal dans la direction d'antenne horizontale et un décalage par rapport au deuxième faisceau principal dans la direction d'antenne verticale ; et
le deuxième paramètre de formation de faisceau comprend un identifiant d'un faisceau dans la direction d'antenne horizontale, un identifiant d'un faisceau dans la direction d'antenne verticale et une différence de phase dans deux directions de polarisation d'antenne.

9. Dispositif de réseau d'accès selon la revendication 7, dans lequel le paramètre de fenêtre d'envoi de CSI-RS comprend un premier paramètre de fenêtre d'envoi et un deuxième paramètre de fenêtre d'envoi, et le premier paramètre de fenêtre d'envoi comprend un symbole ou une sous-trame de début d'envoi d'un signal CSI-RS dans le domaine temporel, un décalage de symboles ou de sous-trames du signal CSI-RS dans le domaine temporel et une quantité totale de symboles ou de sous-trames occupée par le signal CSI-RS dans le domaine temporel, et sert à indiquer, à l'UE, que le dispositif de réseau d'accès envoie un signal CSI-RS au premier niveau en utilisant la fenêtre dans le domaine temporel ; et
le deuxième paramètre de fenêtre d'envoi comprend une sous-porteuse, un bloc de ressources ou une sous-bande de début d'envoi d'un signal CSI-RS dans le domaine fréquentiel, un décalage de sous-porteuses, de blocs de ressources ou de sous-bandes du signal CSI-RS dans le domaine fréquentiel, et une quantité totale de sous-porteuses, de blocs de ressources ou de sous-bandes occupée par le signal CSI-RS dans le domaine fréquentiel, et sert à indiquer, à l'UE, que le dispositif de réseau d'accès envoie un signal CSI-RS au deuxième niveau en utilisant la fenêtre dans le domaine fréquentiel.

10. Dispositif terminal, comprenant un module de réception (20), un module de traitement (21) et un module d'envoi (22),
le module de réception (20) étant configuré pour recevoir un paramètre de configuration de signal de référence d'informations d'état de canal, noté CSI-RS, envoyé par un dispositif de réseau d'accès, le paramètre de configuration de CSI-RS comprenant une quantité de signaux CSI-RS à envoyer par le dispositif de réseau d'accès à chaque niveau et un taux d'échantillonnage à chaque niveau ; et
le module de traitement (21) étant configuré pour : après que le module de réception (20) a reçu un signal CSI-RS à chaque niveau qui est envoyé par le dispositif de réseau d'accès, déterminer un paramètre de formation de faisceau à chaque niveau sur la base du signal CSI-RS à chaque niveau et du taux d'échantillonnage à chaque niveau, et notifier le paramètre de formation de faisceau à chaque niveau au dispositif de réseau d'accès en utilisant le module d'envoi, une largeur d'un faisceau représenté par le paramètre de formation de faisceau à chaque niveau étant inférieure à une largeur de formation de faisceau utilisée pour fournir le signal CSI-RS à chaque niveau et une largeur de formation de faisceau utilisée pour fournir un signal CSI-RS à un niveau actuel étant inférieure à une largeur d'un faisceau représenté par un paramètre de formation de faisceau notifié à un niveau précédent.

11. Dispositif terminal selon la revendication 10, dans lequel la quantité de signaux CSI-RS à envoyer à chaque niveau comprend une quantité de signaux CSI-RS présentant une même direction de polarisation dans une direction horizontale et une quantité de signaux CSI-RS présentant une même direction de polarisation dans une direction verticale, et le taux d'échantillonnage à chaque niveau comprend un taux d'échantillonnage dans la direction horizontale et un taux d'échantillonnage dans la direction verticale.

12. Dispositif terminal selon la revendication 10 ou 11, dans lequel le paramètre de configuration de CSI-RS comprend en outre un paramètre de fenêtre d'envoi de CSI-RS, le paramètre de fenêtre d'envoi de CSI-RS sert à représenter un mode d'envoi du signal CSI-RS à chaque niveau et le mode d'envoi comprend au moins un des modes suivants : un mode dans lequel le signal CSI-RS à chaque niveau est envoyé en utilisant une fenêtre dans le domaine temporel, un mode dans lequel le signal CSI-RS à chaque niveau est envoyé en utilisant une fenêtre dans le domaine fréquentiel ou un mode dans lequel le signal CSI-RS à chaque niveau est envoyé en utilisant à la fois une fenêtre dans le domaine temporel et une fenêtre dans le domaine fréquentiel.

13. Dispositif terminal selon la revendication 12, dans lequel le paramètre de configuration de CSI-RS comprend une quantité de signaux CSI-RS à envoyer par le dispositif de réseau d'accès à un premier niveau, une quantité de CSI-RS à envoyer à un deuxième niveau, un taux d'échantillonnage au premier niveau et un taux d'échantillonnage au deuxième niveau, et le module de traitement comprend plus particulièrement :
une première unité de traitement, configurée pour : après que le module de réception a reçu un premier signal CSI-RS envoyé par le dispositif de réseau d'accès sur la base de la quantité de signaux CSI-RS à envoyer au premier niveau et d'un premier groupe de faisceaux, déterminer un premier paramètre de formation de faisceau sur la base de la quantité de signaux CSI-RS à envoyer au premier niveau, du taux d'échantillonnage au premier niveau et du premier signal CSI-RS, et notifier le premier paramètre de formation de faisceau au dispositif de réseau d'accès en utilisant le module d'envoi, une largeur d'un faisceau représenté par le premier paramètre de formation de faisceau étant inférieure à une largeur d'un faisceau dans le premier groupe de faisceaux, une quantité de faisceaux dans le premier groupe de faisceaux étant égale à une quantité de premiers signaux CSI-RS et tous les premiers signaux CSI-RS possédant un même facteur de formation de faisceau ; et
une deuxième unité de traitement, configurée pour : après que le module de réception a reçu un deuxième signal CSI-RS envoyé par le dispositif de réseau d'accès sur la base de la quantité de signaux CSI-RS à envoyer au deuxième niveau et d'un deuxième groupe de faisceaux, déterminer un deuxième paramètre de formation de faisceau sur la base de la quantité de signaux CSI-RS à envoyer au deuxième niveau, du taux d'échantillonnage au deuxième niveau et du deuxième signal CSI-RS, et notifier le deuxième paramètre de formation de faisceau au dispositif de réseau d'accès en utilisant le module d'envoi, le deuxième groupe de faisceaux étant déterminé par le dispositif de réseau d'accès sur la base du premier paramètre de formation de faisceau, une largeur d'un faisceau dans le deuxième groupe de faisceaux étant inférieure ou égale à la largeur du faisceau représenté par le premier paramètre de formation de faisceau, une quantité de faisceaux dans le deuxième groupe de faisceaux étant égale à une quantité de deuxièmes signaux CSI-RS, tous les deuxièmes signaux CSI-RS possédant un même facteur de formation de faisceau, et une largeur de formation de faisceau représentée par le deuxième paramètre de formation de faisceau étant inférieure à la largeur du faisceau dans le deuxième groupe de faisceaux.

14. Dispositif terminal selon la revendication 13, dans lequel le premier paramètre de formation de faisceau comprend un identifiant d'un premier faisceau principal dans une direction d'antenne horizontale, un identifiant d'un deuxième faisceau principal dans une direction d'antenne verticale, un décalage par rapport au premier faisceau principal dans la direction d'antenne horizontale et un décalage par rapport au deuxième faisceau principal dans la direction d'antenne verticale ; et
le deuxième paramètre de formation de faisceau comprend un identifiant d'un faisceau dans la direction d'antenne horizontale, un identifiant d'un faisceau dans la direction d'antenne verticale et une différence de phase dans deux directions de polarisation d'antenne.

15. Dispositif terminal selon la revendication 13, dans lequel le paramètre de fenêtre d'envoi de CSI-RS comprend un premier paramètre de fenêtre d'envoi et un deuxième paramètre de fenêtre d'envoi, et le premier paramètre de fenêtre d'envoi comprend un symbole ou une sous-trame de début d'envoi d'un signal CSI-RS dans le domaine temporel, un décalage de symboles ou de sous-trames du signal CSI-RS dans le domaine temporel et une quantité totale de symboles ou de sous-trames occupée par le signal CSI-RS dans le domaine temporel, et sert à indiquer, à l'UE, que le dispositif de réseau d'accès envoie un signal CSI-RS au premier niveau en utilisant la fenêtre dans le domaine temporel ; et
le deuxième paramètre de fenêtre d'envoi comprend une sous-porteuse, un bloc de ressources ou une sous-bande de début d'envoi d'un signal CSI-RS dans le domaine fréquentiel, un décalage de sous-porteuses, de blocs de ressources ou de sous-bandes du signal CSI-RS dans le domaine fréquentiel, et une quantité totale de sous-porteuses, de blocs de ressources ou de sous-bandes occupée par le signal CSI-RS dans le domaine fréquentiel, et sert à indiquer, à l'UE, que le dispositif de réseau d'accès envoie un signal CSI-RS au deuxième niveau en utilisant la fenêtre dans le domaine fréquentiel.
